Europäisches Patentamt

European Patent Office

Office européen des brevets

(11) Publication number: 0 263 433
A2

# (12) EUROPEAN PATENT APPLICATION

(21) Application number: 87114319.4

(22) Date of filing: 01.10.87

(51) Int. Cl.⁴: B60C 27/04 , B60C 27/14 , B60C 27/16

(30) Priority: 03.10.86 JP 235898/86
07.04.87 JP 85453/87
22.06.87 JP 154964/87
29.05.87 JP 136805/87

(43) Date of publication of application:
13.04.88 Bulletin 88/15

(84) Designated Contracting States:
CH DE FR GB LI

(71) Applicant: Bridgestone Corporation
10-1, Kyobashi 1-Chome Chuo-Ku
Tokyo 104(JP)

(72) Inventor: Aramaki, Kuninori
2034, Kamikurata-cho Totsuka-ku
Yokohama-shi Kanagawa(JP)
Inventor: Nakayama, Takeshi
2-8-33, Murota
Chigasaki-shi Kanagawa(JP)
Inventor: Wakana, Hiroshi
2-10-26, Hon-cho
Fuchuu-shi Tokyo(JP)
Inventor: Iizumi, Shingo
710-2-406, Kami-Yabe-cho Totsuka-ku
Yokohama-shi Kanagawa(JP)

(74) Representative: Dreiss, Hosenthien &
Fuhlendorf
Gerokstrasse 6
D-7000 Stuttgart 1(DE)

(54) Tire slippage preventing apparatus.

(57) Disclosed is a tire slippage preventing apparatus, wherein an apparatus body (10) having a boss (17) and arms (14) is supported by an outer periphery of a support (28) fixed on a wheel (60) as a portion of the support (28) penetrates a through hole (18) formed in the boss (12) and an annular groove where the boss (12) is positioned is formed in said outer periphery. The diameter of an annular side wall (38) of this groove on the side where the portion of the support (28) penetrates the through hole (18) is made smaller than that of the through hole. An annular retainer (36) at least a portion (50) of which has a diameter greater than that of the through hole (18) is disposed in the groove. Accordingly, the apparatus body (10) is prevented from coming off the annular groove.

FIG. 1

# Tire Slippage Preventing Apparatus

## BACKGROUND OF THE INVENTION:

### Field of the Invention:

The present invention relates to a tire slippage preventing apparatus, and, more particularly to a tire slippage preventing apparatus of the type which is provided with arms extending radially from a boss and bent in the midway thereof, and which is disposed in such a manner that tip portions of the arms cover the peripheral portion of the tire with the boss installed on a wheel.

### Related Art:

As tire slippage preventing apparatuses of this type, one proposed in Japanese Patent Laid-Open No. 172805/1982 and one proposed in Japanese Patent Laid-Open No. 56609/1985 are known.

The aforementioned conventional apparatuses are arranged in such a manner that an apparatus body having a boss and arms is installed on a wheel via an apparatus installing means. This apparatus body installing means is arranged such that hub bolts for connecting the wheel to an axle via a hub are replaced by special bolts, and the apparatus body installing means is installed on a wheel using these special bolts. The apparatus body is installed detachably on the apparatus body installing means.

With the above-described apparatuses, however, even in the case of wheels having an identical rim diameter, detailed specifications differ, including the length of a hub bolt, a thread diameter, a pitch circle diameter, rim width, and an amount of offset, etc.Consequently, it has been necessary to prepare numerous types of apparatus body installing means and adjustment members, so that there has been a drawback in that the production costs increase.

In addition, since it is essential to replace the hub bolts with special ones, there has been a drawback in that the work efficiency in installing the apparatus body installing means is poor.

Furthermore, this apparatus body installing means is constituted by a support installed on a wheel as well as a retainer installed on this support and adapted to clamp an apparatus body between the support and an apparatus body. Accordingly, the apparatus installing means must be provided with a complicated mechanism for positively installing the retainer onto the support. As a result, there have been additional drawbacks of the overall apparatus becoming complicated, increased weight, and high production costs.

## SUMMARY OF THE INVENTION:

Accordingly, an object of the present invention is to provide a tire slippage preventing apparatus in which the work efficiency in installing a support on a wheel is excellent and the installation of a retainer on the support can be effected positively although a simple mechanism is employed.

To this end, according to the present invention, there is provided a tire slippage preventing apparatus having an apparatus body provided with a boss in which a through hole is formed and arms extending radially from the boss and tip portions thereof located at an outer peripheral portion of tire of a wheel of a vehicle, and a support installed on the wheel and adapted to support the boss with an outer peripehral portion thereof penetrating the through hole, the apparatus comprising: an annular groove disposed in the support and adapted to support the boss at the outer peripheral portion thereof, the diameter of a first annular side wall of the groove on the side of the annular groove penetrating the through hole being smaller than that of the through hole; and an annular retainer disposed in the groove, at least a portion of the groove having a diameter greater than that of the through hole, whereby the apparatus body is prevented from coming off the support.

The above and other objects, features and advantages of the present invention will become apparent from the following detailed description of the invention when read in conjunction with the accompanying drawings.

## BRIEF DESCRIPTION OF THE DRAWINGS:

Fig. 1 is a cross-sectional view illustrating a first embodiment of a tire slippage preventing apparatus in accordance with the present invention;

Fig. 2 is an exploded perspective view of the apparatus shown in Fig. 2;

Fig. 3 is a perspective view of a spring plate of Fig. 2 as viewed from the opposite direction;

Fig. 4 is a cross-sectional view of the apparatus of the first embodiment which is applied to a wheel which is different from the one shown in Fig. 1;

Fig. 5 is a perspective view illustrating another example of an end ring;

Fig. 6 is a side elevational view of a buckle according to another example;

Fig. 7 is an exploded perspective view illustrating a second embodiment of the present invention;

Fig. 8 is cross-sectional view illustrating a third embodiment of the present invention;

Fig. 9 is a cross-sectional view of an essential portion of a forth embodiment of the present invention;

Fig. 10 is a cross-sectional view of an essential portion of a fifth embodiment of the present invention;

Fig. 11 is an exploded view of the portion shown in Fig. 10;

Fig. 12 is a cross-sectional view of a sixth embodiment of the present invention;

Fig. 13 is an exploded perspective view of Fig. 12;

Fig. 14 is a perspective view of an apparatus body illustrating an essential portion of a seventh embodiment of the present invention;

Fig. 15 is a cross-sectional view of an eighth embodiment of the present invention;

Fig. 16 is an exploded perspective view of Fig. 15;

Fig. 17 is a cross-sectional view of a ninth embodiment of the present invention;

Fig. 18 is a perspective view of an end ring shown in Fig. 17;

Fig. 19 is an exploded perspective view of a tenth embodiment of a tire slippage preventing apparatus in accordance with the present invention;

Fig. 20 is a cross-sectional view illustrating a state in which the apparatus of the tenth embodiment is installed on a wheel;

Fig. 21 is a detailed partial perspective view of Fig. 19;

Fig. 22 is a perspective view illustrating another example of the apparatus body;

Fig. 23 is a front elevational view of still another example of the apparatus body;

Fig. 24 is a cross-sectional view illustrating an eleventh embodiment of the present invention corresponding to Fig. 20;

Fig. 25 is a perspective view of the support shown in Fig. 24;

Fig. 26 is a cross-sectional view illustrating a twelfth embodiment of the present invention corresponding to Fig. 20;

Fig. 27 is a cross-sectional view illustrating a thirteenth embodiment of the present invention corresponding with Fig. 20;

Fig. 28 is a cross-sectional view illustrating a fourteenth embodiment of the present invention corresponding with Fig. 20;

Fig. 29 is a front elevational view illustrating the support and a wheel that are shown in Fig. 28;

Figs. 30(A), 30(B) and 30(C) are front elevational views illustrating installation procedures using installation aiding tools;

Figs. 31 to 44 illustrate a fifteenth embodiment in which a slippage preventing structure according to the present invention is applied to the arms of the slippage preventing apparatus; in which

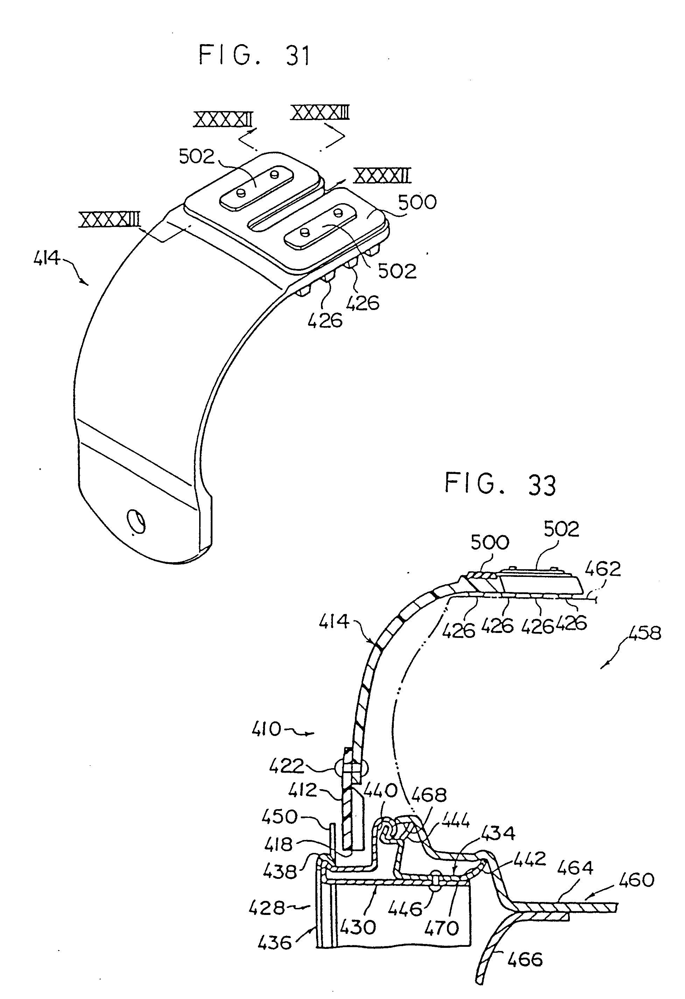

Fig. 31 is a perspective view of the arm constituting the slippage preventing structure;

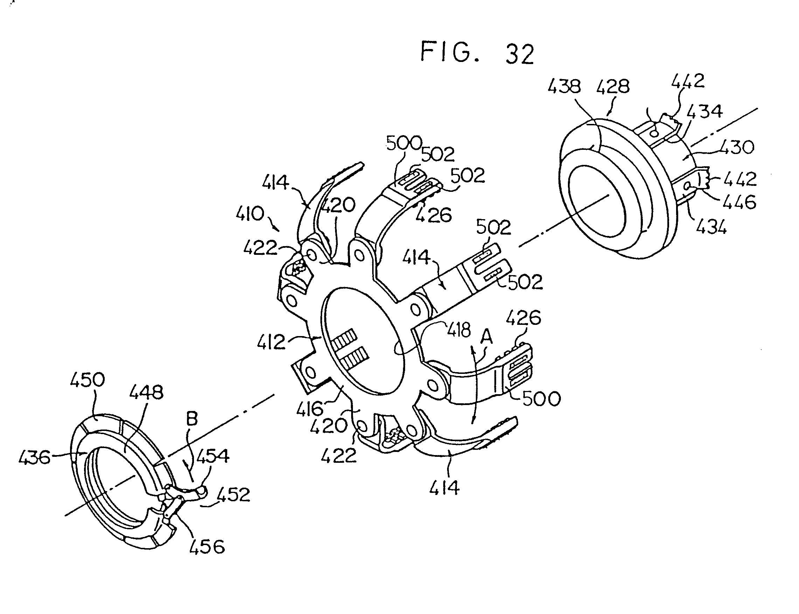

Fig. 32 is an exploded perspective view of the tire slippage preventing apparatus;

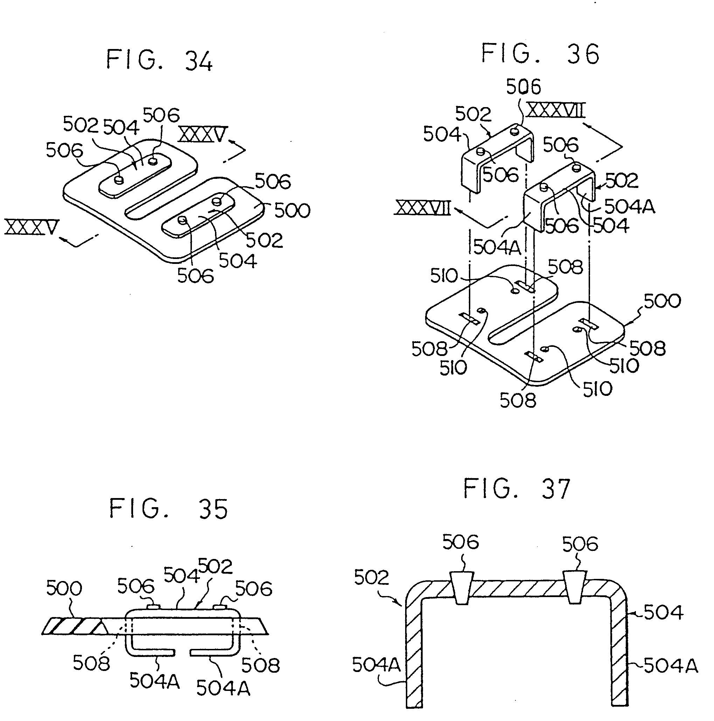

Fig. 33 is a cross-sectional view illustrating a state in which the tire slippage preventing apparatus is installed on the wheel;

Fig. 34 is a perspective view of a rubber plate with spikes before it is connected to the arm;

Fig. 35 is a cross-sectional view taken along the line XXXV - XXXV of Fig. 34;

Fig. 36 is an exploded perspective view of Fig. 34;

Fig. 37 is a cross-sectional view taken along the line XXXVII - XXXVII of Fig. 36;

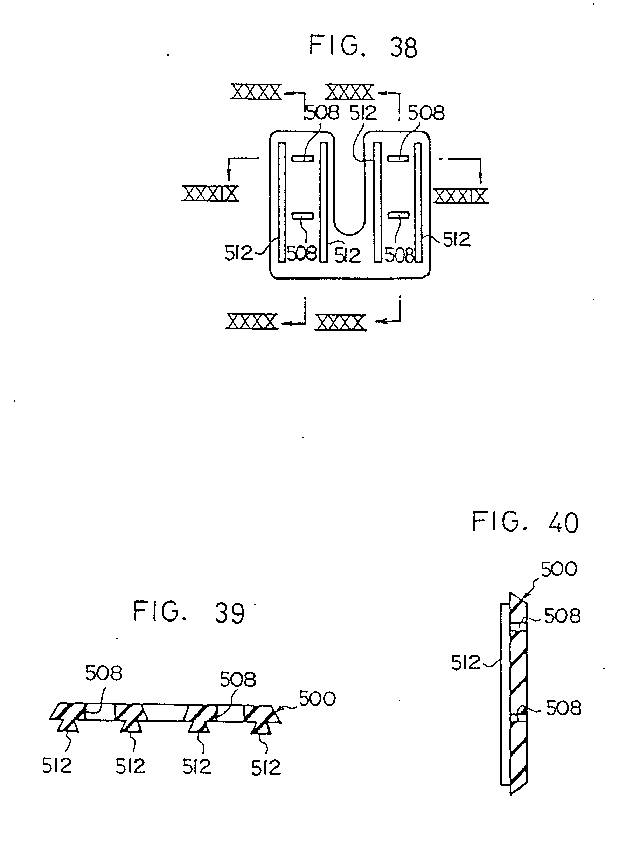

Fig. 38 is a diagram of a reverse side of the rubber plate;

Fig. 39 is a cross-sectional view taken along the line XXXIX - XXXIX of Fig. 38;

Fig. 40 is a cross-sectional view taken along the line XXXX - XXXX of Fig. 38;

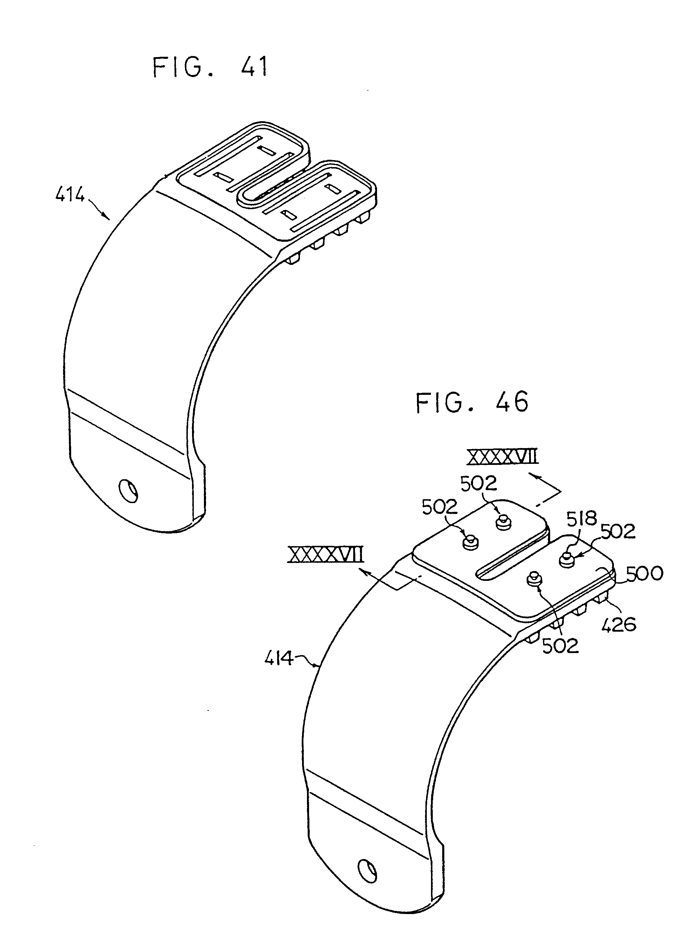

Fig. 41 is a perspective view of the arm formed of a synthetic resin;

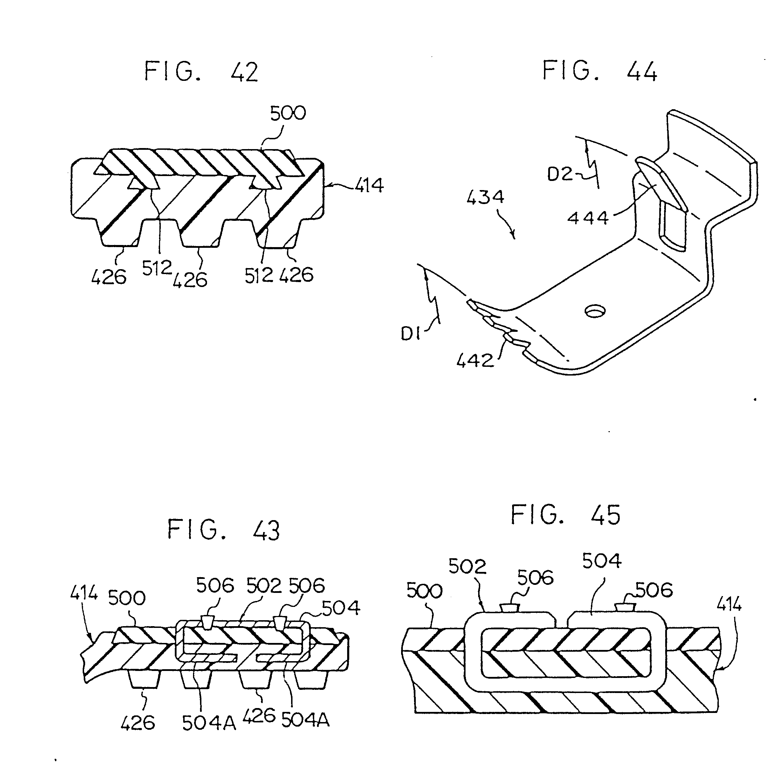

Fig. 42 is a cross-sectional view taken along the line XXXXII - XXXXII of Fig. 31;

Fig. 43 is a cross-sectional view taken along the line XXXXIII - XXXXIII of Fig. 31; and

Fig. 44 is is a perspective view of the spring plate as viewed from the opposite direction;

Fig. 45 is a cross-sectional view illustrating a modification of the spikes;

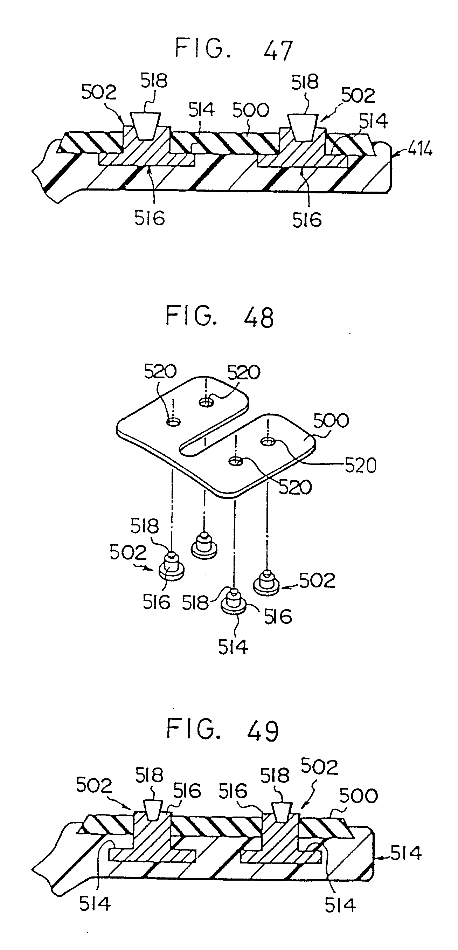

Figs. 46 to 48 illustrate a sixteeth embodiment of the present invention; in which

Fig. 46 is a perspective view of the arm;

Fig. 47 is a cross-sectional view taken along the line XXXXVII - XXXXVII of Fig. 46; and

Fig. 48 is an exploded perspective view illustrating the rubber plate and spikes;

Fig. 49 is a cross sectional view illustrating a modification of the sixteenth embodiment corresponding to Fig. 47;

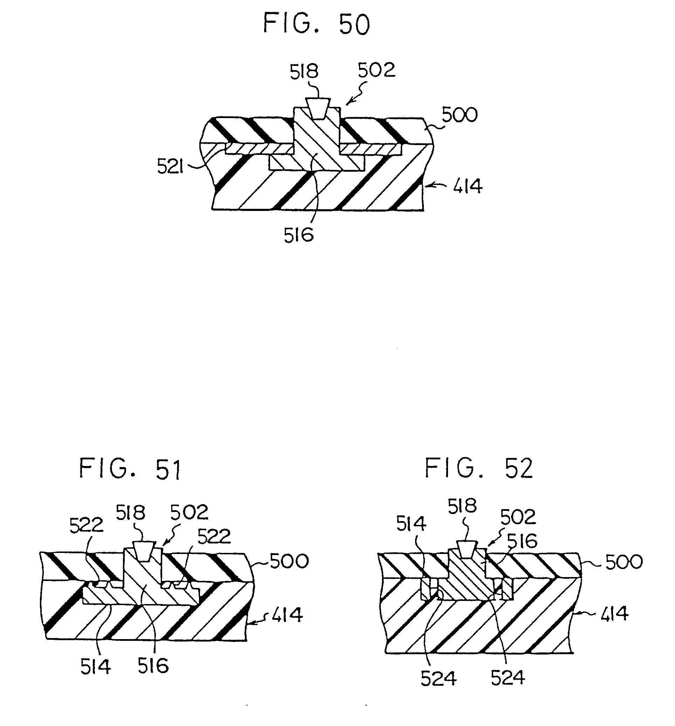

Figs. 50 to 52 are cross-sectional views illustrating modifications of the spikes in the sixteenth embodiment;

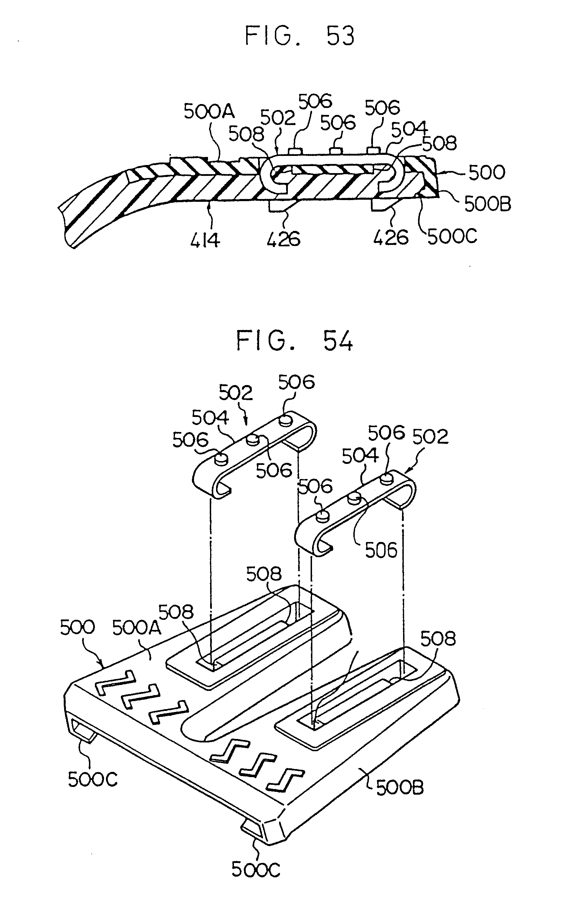

Figs. 53 to 56 illustrate a seventeenth embodiment of the present invention; in which

Fig. 53 is a cross-sectional view corresponding to Fig. 43;

Fig. 54 is an exploded perspective view corresponding to Fig. 36;

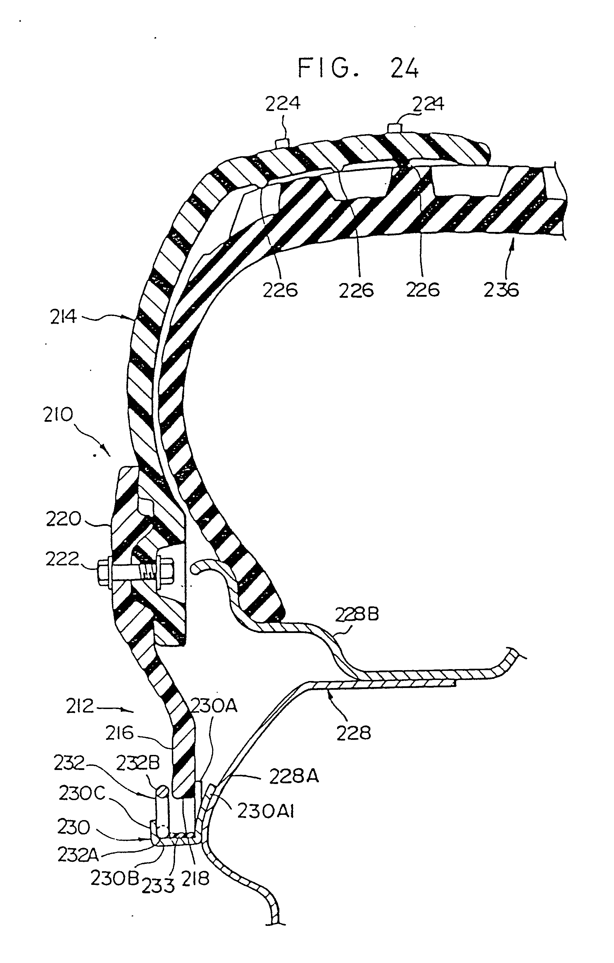

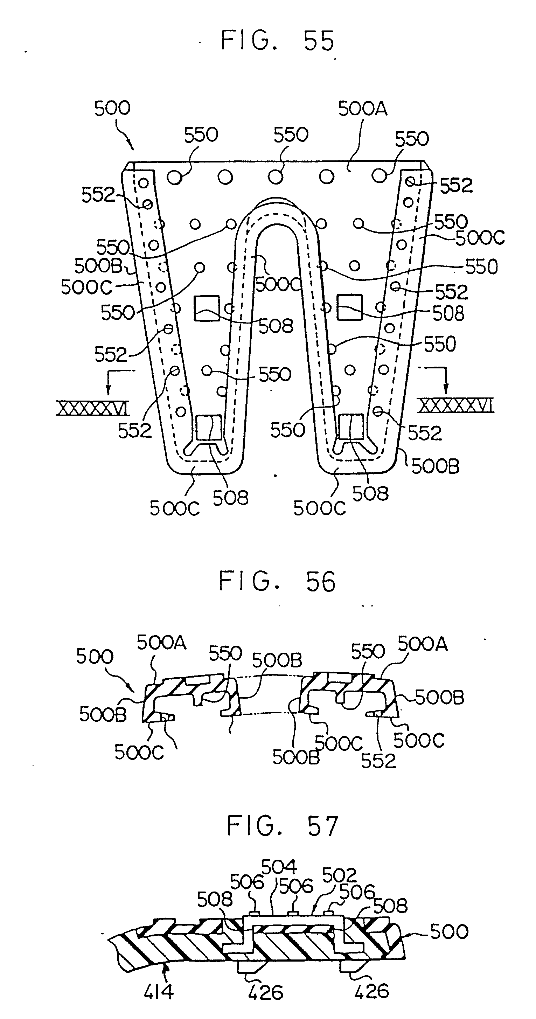

Fig. 55 is a diagram of the reverse side of the rubber plate shown in Fig. 24; and

Fig. 56 is a cross-sectional view taken along the line XXXXXVI - XXXXXVI of Fig. 55;

Fig. 57 is a cross-sectional view illustrating a modification of the seventeenth embodiment in correspondence to Fig. 53;

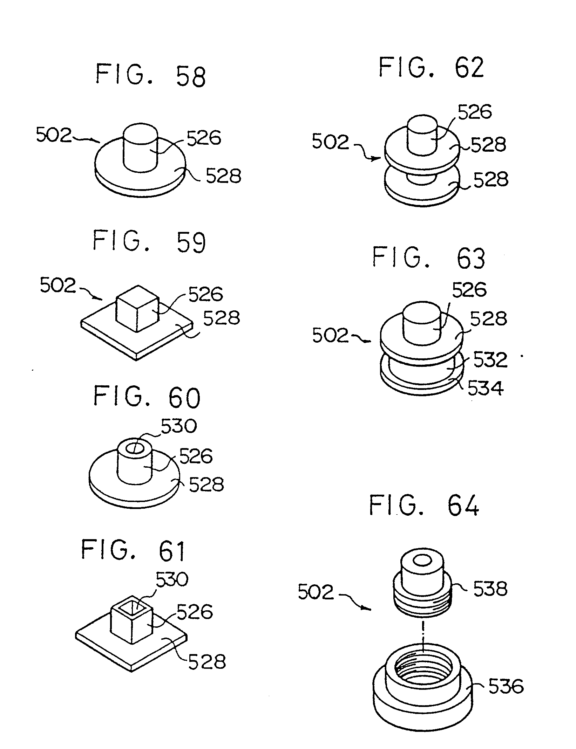

Figs. 58 to 64 illustrate examples of the spikes formed of a synthetic resin; in which

Figs. 58 to 63 are perspective views thereof; and

Fig. 64 is an exploded perspective view;

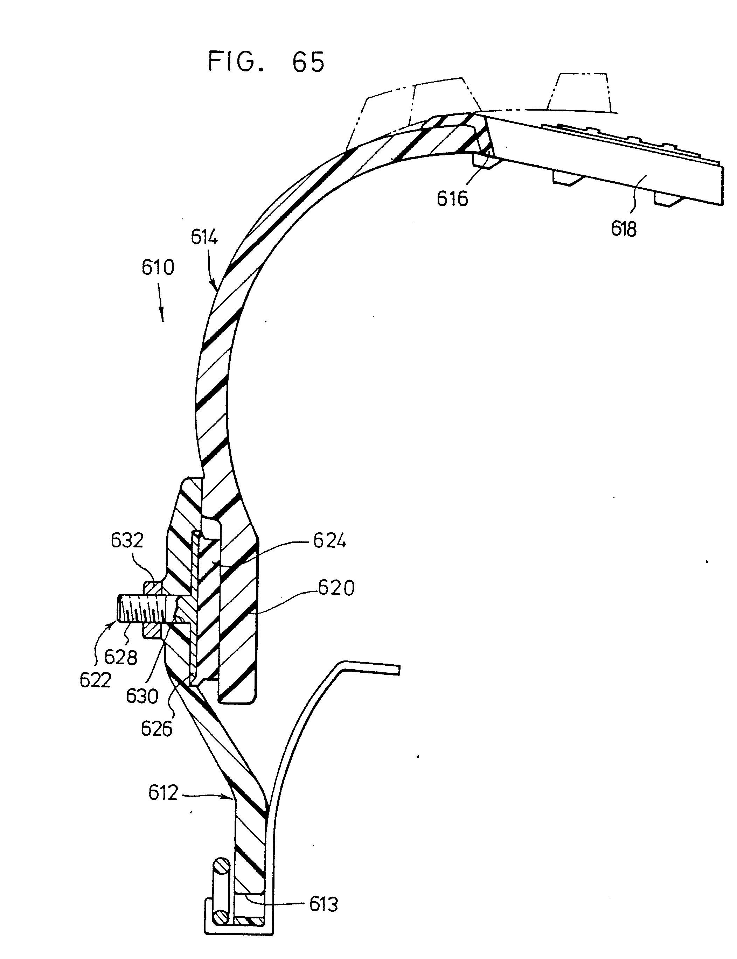

Fig. 65 is a cross-sectional view of the apparatus body explaining an eighteenth embodiment;

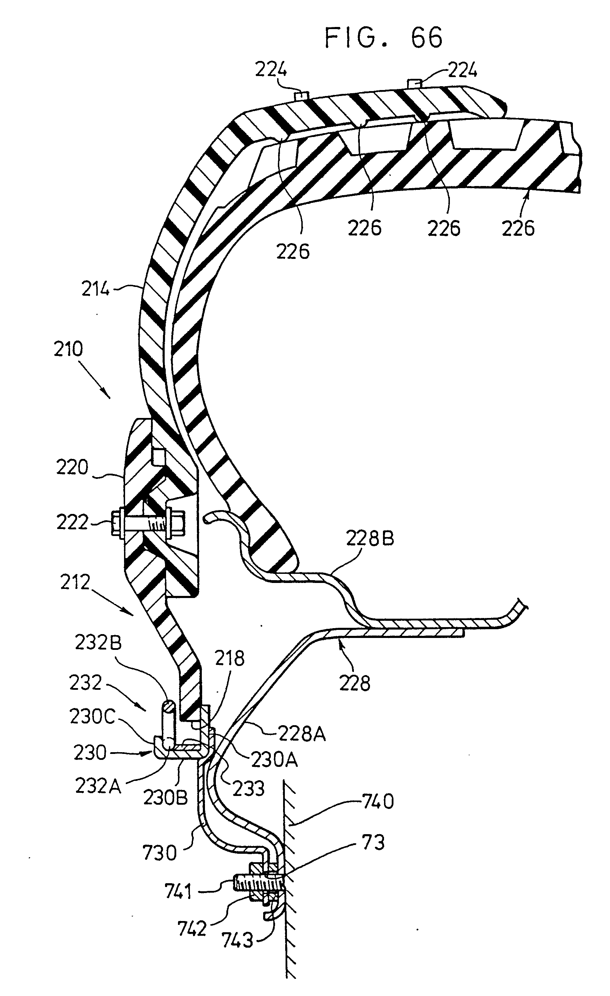

Fig. 66 is a cross-sectional view of a ninteenth embodiment;

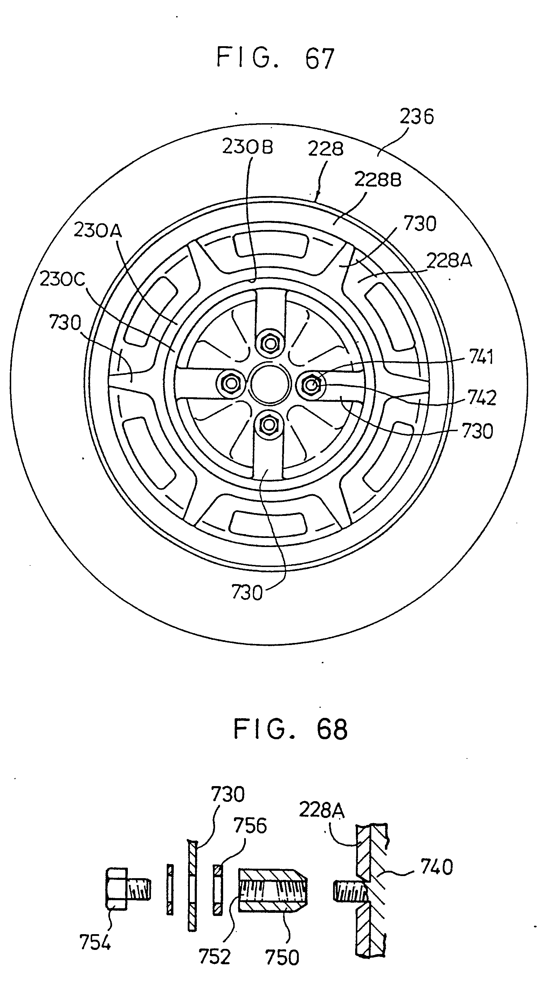

Fig. 67 is a front elevational view of the support and the wheel shown in Fig. 66; and

Fig. 68 is a diagram illustrating a twentieth embodiment.

## DESCRIPTION OF THE PREFERRED EMBODIMENTS:

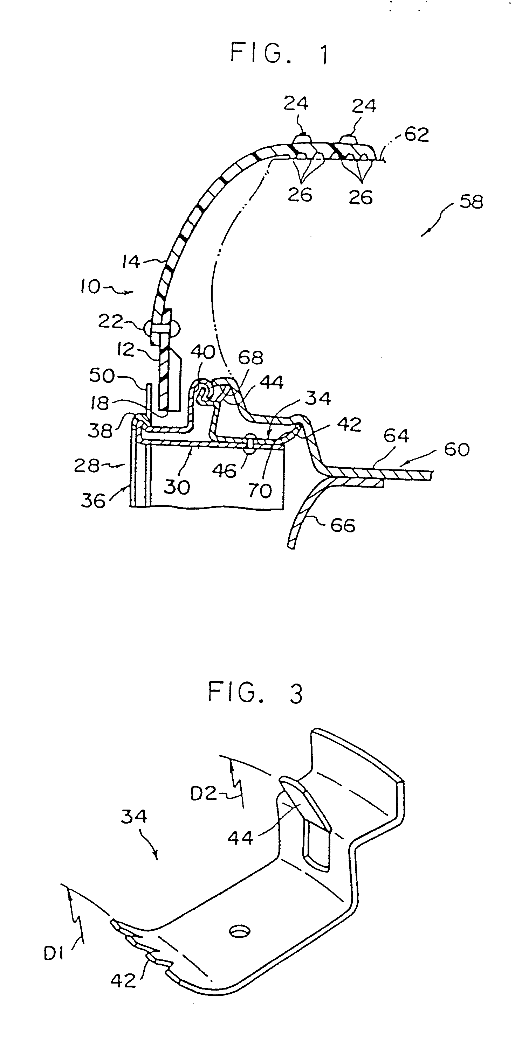

Figs. 1 to 3 show a first embodiment of a tire slippage preventing apparatus in accordance with the present invention.

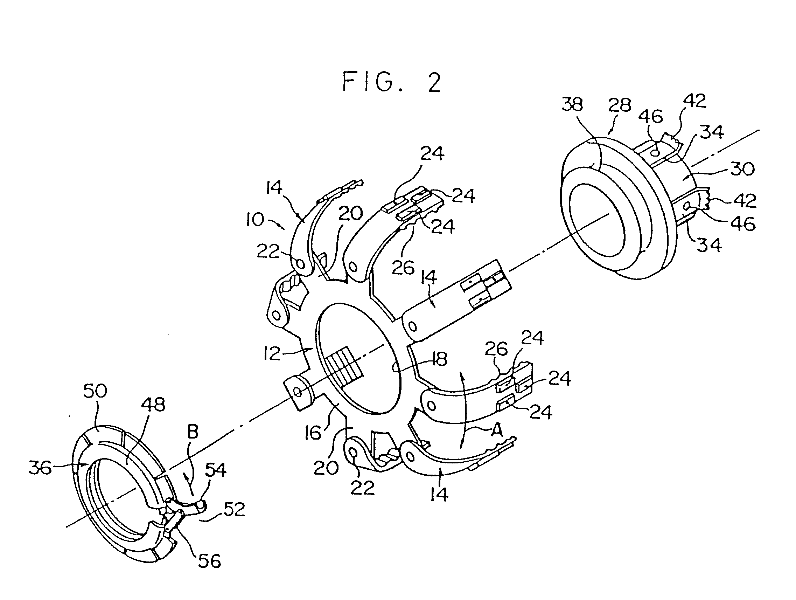

As shown in Figs. 1 and 2, an apparatus body 10 is provided with a boss 12 and eight arms 14 respectively formed of a synthetic resin. As specific examples of these materials, for instance, a thermosetting resin, such as FRP, is used for the boss 12, while a thermoplastic elastomer, such as thermoplastic urethane, is used for the arms 14. A through hole 18 is formed in a central portion of a disk portion 16 of the boss 12, and eight arm connecting portions 20 projecting radially at equal intervals from the periphery of the disk portion 16 are formed integrally therewith. Each of the arms 14 has its one end portion connected to the arm connecting portion 20 via a pin 22, and an intermediate portion thereof is bent, and an end portion thereof extends in the axial direction of the boss 12. Spike pins 24 are embedded in the outer peripheral surface of the free end portion of the arm 14 such as to project therefrom, while projections 26 are formed integrally on the inner peripheral portion thereof.

Incidentally, each of the arms 14 is manually swingable with the pin 22 as a fulcrum in the direction of an arrow A shown in Fig. 2.

As shown in Figs. 1 and 2, an apparatus body installing means 28 is constituted by an attachment 30 made of a steel plate formed into a tubular shape, a spring plate 34 secured to the attachment 30, and an end ring 36 which serves as a stopper and is detachably secured to the attachment 30. The attachment 30 is bent a multiplicity of times, as shown in Fig. 1, and an annular projection 38 is formed at one axial end portion thereof, while an annular recess 40 is formed in an intermediate portion thereof. The diameter of the annular projection 38 is made smaller than that of the through hole 18 in the boss 12.

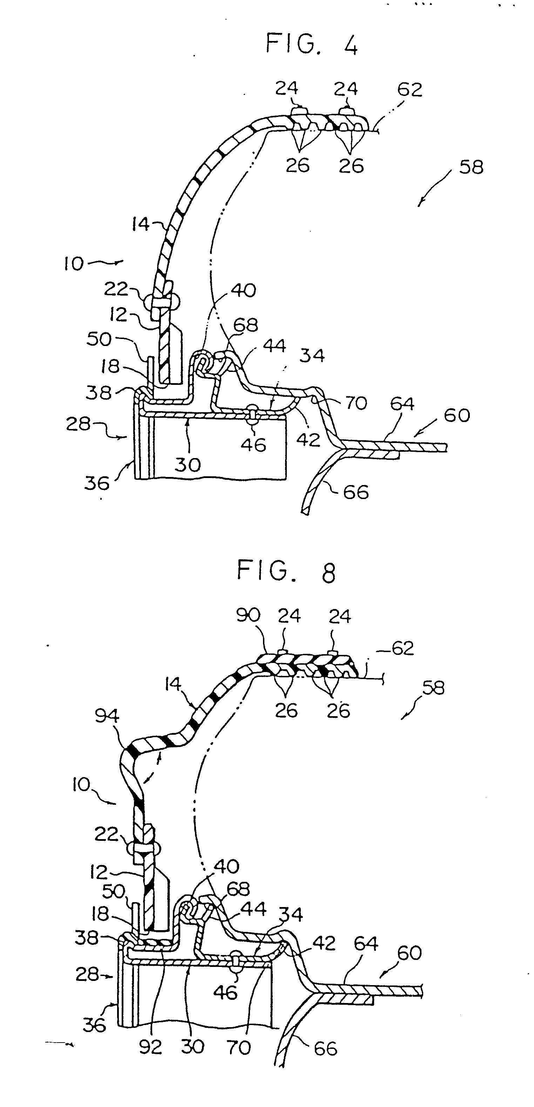

The spring plate 34 is made of spring steel, and is bent, as shown in Fig. 3, and retaining claws 42 are formed at one end portion thereof, while a guide claw 44 is cut out, the other end portion thereof being fitted with the annular recess 40. Four spring plates 34 are disposed at equal intervals around the outer periphery of the attachment 30, and are secured by means of rivets 46.

A ring portion 48 and a flange 50 bent from the ring portion 48 are formed in the end ring 36. This ring portion 48 has a cross section substantially formed into a U-shape corresponding with the annular projection 38, and a portion thereof is split so as to be discontinuous. In addition, the end ring 36 is provided with a buckle 52 for connecting the opposite ends of the ring portion 48. The buckle 52 is arranged such that it has a lever 54 pivotally supported by one end portion of the ring portion 48 and a link plate 56 pivotally supported by the other end of the ring portion 48, and and end portion of the link plate 56 is pivotally supported by an intermediate portion of the lever 54.

The buckle 52 is arranged such that, when the lever 54 is inclined in the direction of an arrow B, the opposite end portions of the ring portion 48 are pulled by an increased tensile force so as to cause the diameter of the end ring 36 to be reduced. The flange 50 does not hamper the motion for reducing the diameter since grooves are formed in the peripheral portion thereof at fixed intervals. In a state of the end ring 36 in which its diameter is reduced, the diameter of the ring portion 48 is slightly smaller than that of the annular projection 38. Accordingly, when the ring portion 48 is set around the annular projection 38 and installed on the attachment 30, the end ring 36 is restrained by its own resiliency such as to be immovable. In addition, the outer diameter of the flange 50 in this state is sufficiently greater than the diameter of the through hole 18.

As shown in Fig. 1, a wheel 58, on which the tire slippage preventing apparatus having the above-described arrangement comprises a wheel 60 and a tire 62 installed on the wheel 60. The wheel 60 comprises a rim 64 to which the tire 62 is fitted and a disk portion 66 welded to the rim 64. Annular grooves 68, 70 are respectively formed in an end portion and intermediate bent portion of a lug of the rim 64.

Incidentally, a distance between the inner peripheral surface of the free end portion of the arm 14 and an axis of the boss 12 is set to be substantially identical with that between a tread portion in the ground-non-contacting portion of the tire 62 and an axis of the disk 66. In addition, with respect to the apparatus body installing means as well, circumference diameters D1, D2 (see Fig. 3) of the retaining claws 42 and the guide claw 44 formed on the spring plate 34 are determined in relationship with the rim 64.

The mounting and demounting procedures as well as the operation of this embodiment will be described hereafter.

First, description will be made of the mounting procedure. When mounting the tire slippage preventing apparatus, the attachment 30 of the apparatus body installing means 28 is first installed on the wheel 60. This installation is completed by a simple operation in which the attachment 30 is pressed into the inner peripheral portion of the rim 64.

In other words, the attachment 30 is moved inwardly in a state in which the retaining claws 42 of the spring plate 34 are subjected to elastic deformation in the direction in which the diameter is reduced, and the attachment cannot be moved any further in a state in which the retaining claws 42 are engaged with the annular groove 70. In addition, in this state, the guide claw 44 of the spring plate 34 resiliently abuts against the annular groove 68. As a result, the attachment 30 is securely fixed to the wheel 60.

Subsequently, the apparatus body 10 is installed on the attachment 30. This installation is effected by an operation in which the boss 12 is fitted with the attachment 30 with the through hole 18 in the boss 12 opposing the attachment 30. At that juncture, the tire 62 is pressed by the weight of the vehicle and is in contact with the ground over a wide area. Accordingly, with respect to the mutually adjacent two arms 14 of the eight arms 14, in that state it is difficult for the free end portions thereof to be disposed on the tread portions at the predetermined position of the tire 62. Therefore, the two arms 14 are placed between the ground-contacting portion of the tire 62, and they are swung with the pins 22 as fulcrums in the directions in which they are separated from each other, and are disposed on the tread portions offset in the circumferential direction from their predetermined positions.

Then, the end ring 36 is installed on the attachment 30. This installation is effected by an operation in which, in a state in which the flange 50 side of the end ring 36 faces the boss 12 and the lever 54 is not inclined, the ring portion 48 is wound around the annular projection 38 of the attachment 30, and the lever 54 is then inclined. As a result, the end ring 36 is fixed securely to the attachment 30. This completes the mounting operation.

Subsequently, shortly after the vehicle has begun running, the two arms 14 are swung naturally in directions opposite to those described above, and are thus disposed in their predetermined positions. In this state, at least in the radial direction, the boss 12 is capable of moving with play by a distance in which the outer diameter of the attachment 30 with which the boss 12 is fitted is subtracted from the diameter of the through hole 18.

Description will now be given of operation. When the wheel 58 is rotated as the vehicle runs, the frictional force of the arms 14 with respect to the tire 62 is large since the projections 26 are formed at the free end portions thereof, so that the arms 14 rotate together with the wheel 58. At the portion of the arm 14 which has been brought into contact with the ground, the diameter of the arm 14 is reduced since the tire 62 is pressed by the weight of the vehicle. Consequently, to absorb this deflection, the arm 14 is bent resiliently, and, at the same time, the boss 12 moves radially inwardly. Accordingly, the apparatus body 10 undergoes elliptic motion about the axle while the vehicle is running. Since the arms 14 are provided with the spike pins 24, a gripping force is increased particularly at the time of starting, braking, and turning, so that the tire 62 displays a treading performance similar to that of a spike tire.

At the time when the vehicle turns, a side force acts, and this force tends to move the boss 12 in the axial direction and to come off the attachment 30. However, the boss 12 is brought into contact with the flange 50 of the end ring 36, which prevents the boss 12 from coming off.

In addition, even in cases where the tire 62 is displaced in the width-wise direction relative to the wheel 60 owing to the action of a side force, a load which results from the moment acting on the apparatus body 10 and the apparatus body installing means 28 can be absorbed since the apparatus body installing means 28 is subjected to elastic deformation.

Description will now be made of demounting procedures. In the demounting of the tire slippage preventing apparatus, only the apparatus body 10 and the end ring 36 are normally demounted. To demount the apparatus body 10, the lever 54 is first pulled up, which causes the diameter of the ring portion 48 to expand, allowing the end ring 36 to be removed from the attachment 30. At that juncture, if all the arms 14 are not in contact with the ground, the apparatus body 10 can be pulled out from the attachment 30, which completes the demounting operation. On the other hand, when some arms 14 are in contact with the ground, demounting is effected in procedures opposite to those of the mounting operation.

Even if the attachment 30 remains installed on the vehicle, the attachment 30 does not affect the running of the vehicle, so that it can be left installed during a snowy season regardless of whether or not the tire slippage preventing apparatus is required. On the subsequent occasion of the mounting operation, only the apparatus body 10 and the end ring 36 may be installed. When removing the attachment 30, it can be done so readily by simply pulling it out.

Thus, in this embodiment, since the tire slippage preventing apparatus as a whole is installed resiliently on the wheel 60, and since the apparatus body 10 is capable of undergoing elliptical motion relative to the axle, the input is distributed over a wide portion, so that an unstrained force does not act on various parts, and the durability is improved.

In addition, since the apparatus body 10 is supported by the apparatus body installing means 28 in the vicinity of the lug portion of the rim 64 in the radial direction of the wheel 60, the length of the arm of moment is reduced and the moment at the time when a side force acts on it becomes small, whereas a conventional apparatus is supported in the vicinity of a hat-shaped portion of the disk. The durability is improved in this respect as well.

Furthermore, since the apparatus is compact, lightweight, and simple in its structure, the production costs can be reduced.

Fig. 4 shows an example in which the apparatus in accordance with the above-described first embodiment is applied to the wheel 60 which is different from the one described above. In this case, the guide claw 44 reaches the annular groove 68 before the retaining claws 42 of the spring 34 reaches the annular groove 70 of the rim 64, thereby preventing the the attachment 30 from moving any further. This state is the mounted condition. The inner diameter of the rim 64, against which the retaining claws 42 abut, is not very different from that of a normal case although the width, thickness, and taper of the rim, etc., may vary. Therefore, the attachment 30 can be fixed securely to the wheel 60 in this case as well.

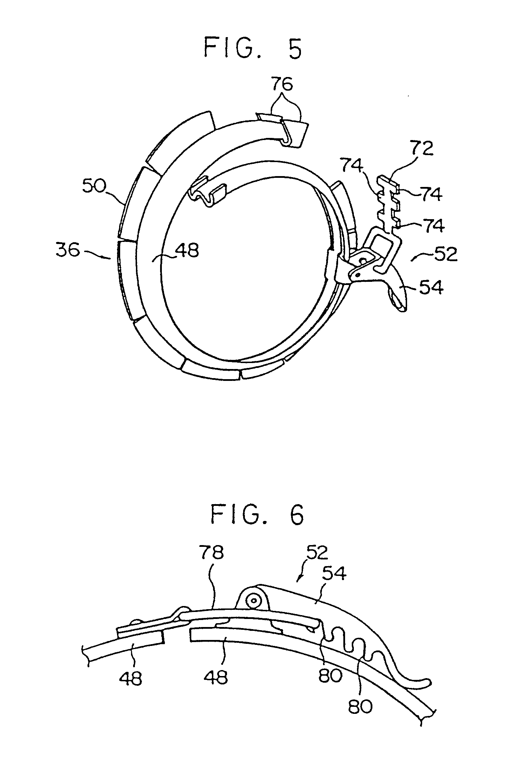

Fig. 5 shows another example of the end ring 36. In this example, projections 74 are formed on a joint plate 72 corresponding to the link plate 56, and are adapted to engage with projections 76 formed on the ring portion 48. Since the projections 74 are formed such as to extend in the circumferential direction of the ring portion 48, the length of the ring portion 48 can be adjusted.

Fig. 6 shows another example of the buckle 52. In this example, a U-shaped ring 78 corresponding to the link plate 56 is selectively engaged with any of a plurality of recesses 80 formed on the lever 54, thereby allowing the length of the ring portion 48 to be adjusted.

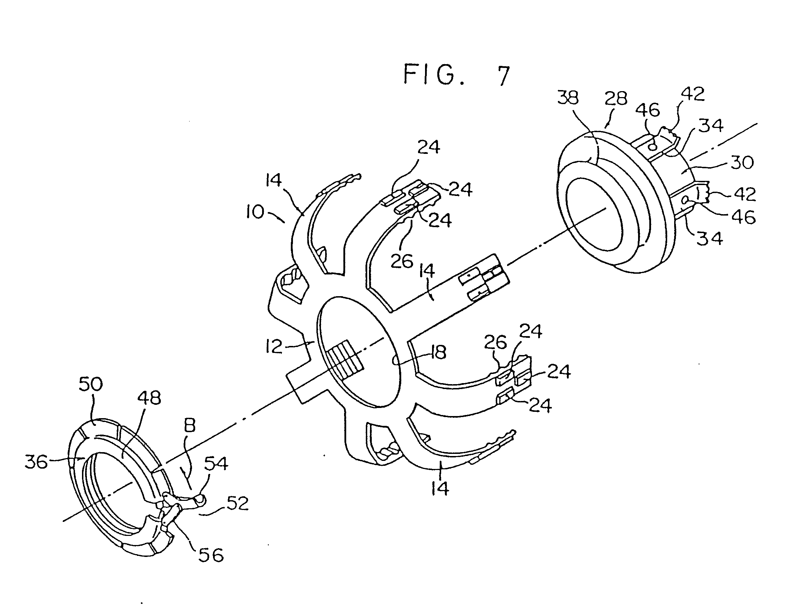

Fig. 7 shows a second embodiment of the present invention. This embodiment differs from the first embodiment in that the apparatus body 10 has the boss 12 and the arms 14 formed integrally with each other. In this embodiment, since the arms 14 are not swung, the arms 14 must be made of an elastic material. In addition, when installing the apparatus body 10, after the apparatus body is secured provisionally, the vehicle must be moved to cause the wheel 58 to rotate slightly, thereby completing the mounting of the apparatus body 10. However, this embodiment has an advantage in that the vibration can be reduced since the movable portions of the apparatus body 10 are eliminated.

In addition, as another exampple of the apparatus body 10, it is possible to adopt an arrangement in which the free end portions of the arms 14 are made continuous in the form of a belt, and the portion thereof disposed around the outer peripheral portion of the tire 62 is made annular.

Fig. 8 shows a third embodiment of the present invention. In this example, a rubber plate 90 in which the spike pins 24 are embedded is bonded to the ground-contacting portions of the arms 14 by means of baking and vulcanization. Since this portion is brought into contact with the road, this portion is required to excell in abrasion resistance and bending resistance. As a material having these characteristics, it is possible to use urethane, as mentioned earlier. However, urethane has a drawback in that its cost is high. Therefore, the rubber plate 90 is bonded to the ground-contacting portion, as in the case of this embodiment, an inexpensive and lightweight thermosetting resin, such as FRP, or a thermoplastic elastomer, such a polyethylene, can be used for the arms 14, so that it is advantageous in terms of costs.

Furthermore, since the rubber plate 90 is used, the characteristics of rubber are made used of, and the abrasion resistance is enhanced with a resultant improvement in durability. Consequently, the coefficient of friction becomes large, so that the braking and traction performance can be improved, and the noise can be reduced.

In this embodiment, a rubber buffer material 92 is provided around the periphery of the portion of the attachment 30 corresponding to the through hole 18 in the boss 12. This is because a gap is formed between the peripheral wall of the through hole 18 and the outer peripheral wall of the attachment 30, so that the boss 12 and the attachment 30 are able to move slightly relative to each other in the radial direction, with the result that noise is generated by the collision of the two memebers, and the there is a possibility of the boss 12 becoming damaged. Thus, the provision of the rubber buffer material 92 serves to alleviate the collision.

In addition, in this embodiment, a flexible portion 94 bent in a smoothly projecting shape is formed on a side portion of each of the arms 14. As a result, since the arms 14 can bend readily, the bending strain of the arms 14 occurring each time the arms 14 are brought into contact with the ground can be absorbed primarily by the flexible portion 94 alone. Accordingly, the gap between the perpheral wall of the through hole 18 and the outer peripheral wall of the attachment 30 can be to a minimum which is necessary for the smooth fitting of the two members. The flexible portion 94 can also be formed in the shape of a bellows.

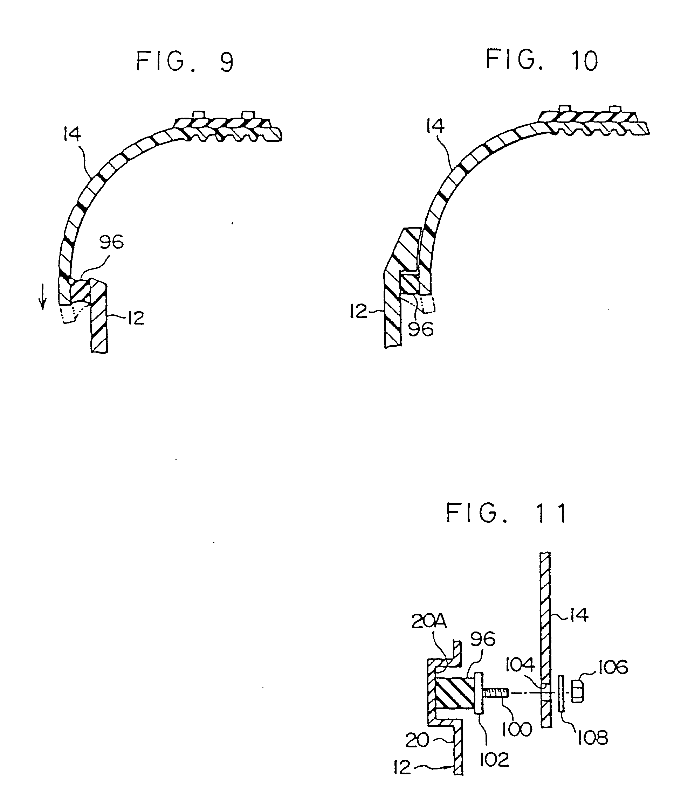

Fig. 9 shows an essential portion of a fourth embodiment of the present invention. In this embodiment, the arms 14 and the boss 12 are connected to each other by means of a block-like rubber material 96. Accodingly, since the bending strain of the arms 14 can be absorbed by the shearing deformation of the rubber material 96, the gap between the peripheral wall of the through hole 18 and the outer peripheral wall of the attachment 30 can be set to a necessary minimum length, as in the case of the preceding embodiment.

Fig. 10 shows an essential portion of a fifth embodiment of the present invention. This embodiment differs from the fourth embodiment in that the arms 14 are disposed on the inside of the boss 12 and abuts against, and is supported by, the boss 12. Accordingly, since a side force to which the arms 14 are subjected by the tire 62 can be received by a wide area of the boss 12 (the arm connecting portion 20), a distance in which the arms 14 escape from the tire 62 in the widthwise direction thereof can be reduced, and durability can be improved. In addition, since the arm 14 can be brought into closer proximity with the side wall of the tire 62, the overall length of the arms 14 can be shortened.

Fig. 11 is a detailed diagram illustrating the connection between the arms 14 and the boss 12 via the rubber material 96. The arrangement is such that one side surface of the cylindrical rubber material 96 is bonded to a recess 20A formed in the arm connecting portion 20 of the boss 12, and a plate 102 provided with a threaded portion 100 is vulcanization-bonded to the other side surface of the rubber material 96. The threaded portion 100 is inserted into a hole 104 formed at one end portion of the arm 14, a nut 106 is secured thereto, so that the plate 102 and a washer 108 press and clamp the arm 14, thereby tightening the arm 14 against the rubber material 96.

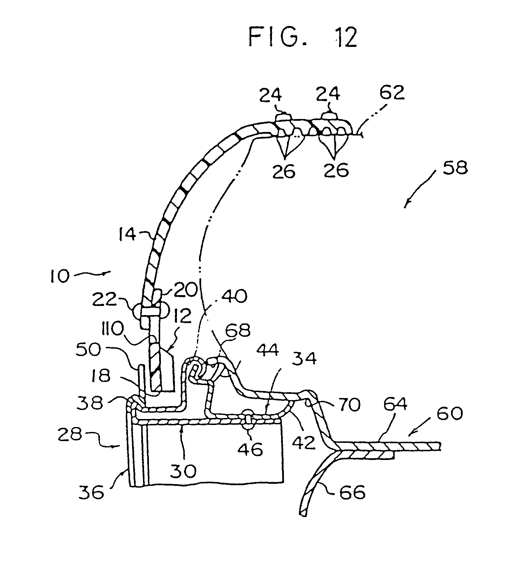

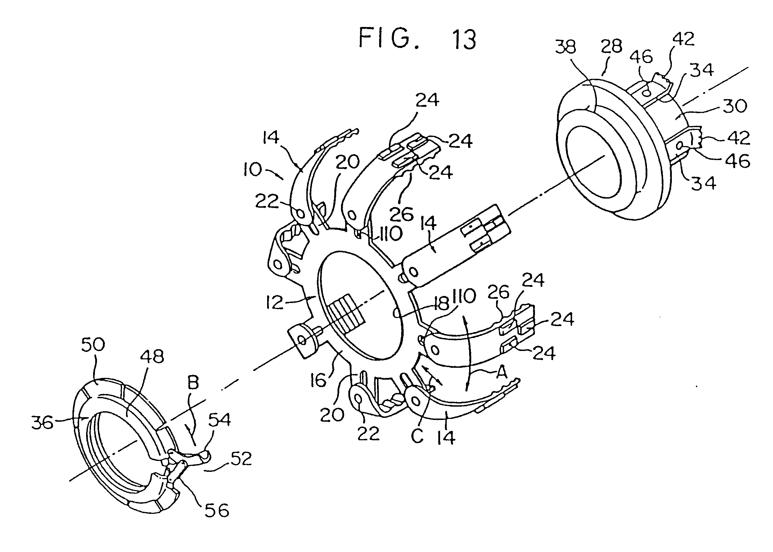

Figs. 12 and 13 show a sixth embodiment of the present invention. In this embodiment, a radially extending elongated hole 110 is formed in each of the arm connecting portions 20 of the boss 12. One end portion of each of the arms 14 is connected to the boss 12 via the pin 22 penetrating this elongated hole 110. Accordingly, the arm 14 is swingable in the direction of an arrow A in Fig. 13 with the pin 22 as a fulcrum, and is slidable in the direction of an arrow C, i.e., in the radial direction of the boss 12.

Consequently, since the force with which the tire 62 presses the arms 14 in the radial direction of the boss 12 can be allowed to escape, the strain of the arms 14 can be alleviated, and the durability and the like improve. In addition, since the arms 14 which are disposed adjacent to each other can be set such as to be wide apart from each other, the operation of mounting and demounting the apparatus body 10 can be further facilitated.

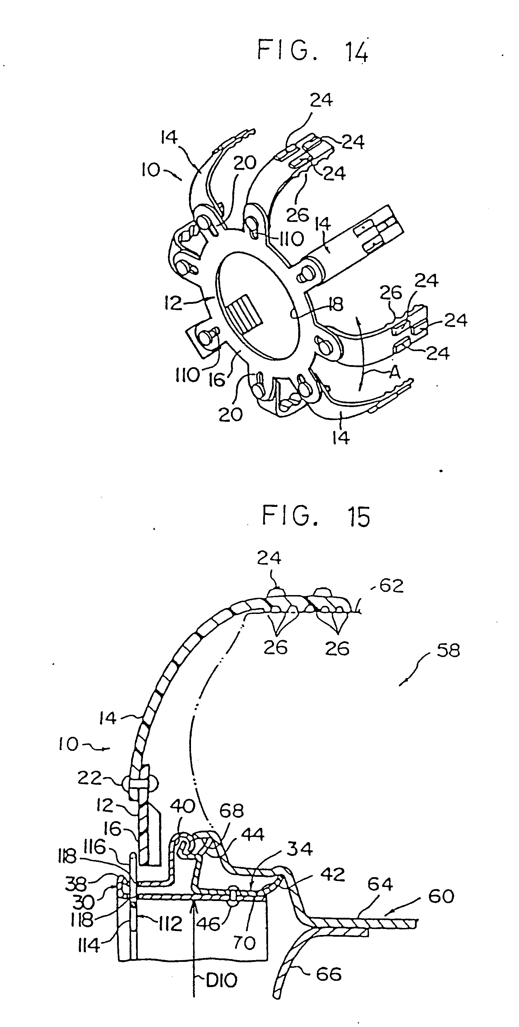

Fig. 14 shows an essential portion of a seventh embodiment of the present invention. This embodiment differs from the sixth embodiment in that the apparatus body 10 is arranged such that the arms 14 are disposed on the inside of the boss 12. This arrangement makes it possible to allow a side force to which the arms 14 are subjected by the tire 62 to be received by a wide area of the arm connecting portions 20, so that it is possible to reduce the distance in which the arms 14 escape from the tire 62 in the widthwise direction thereof, and the durability can be improved.

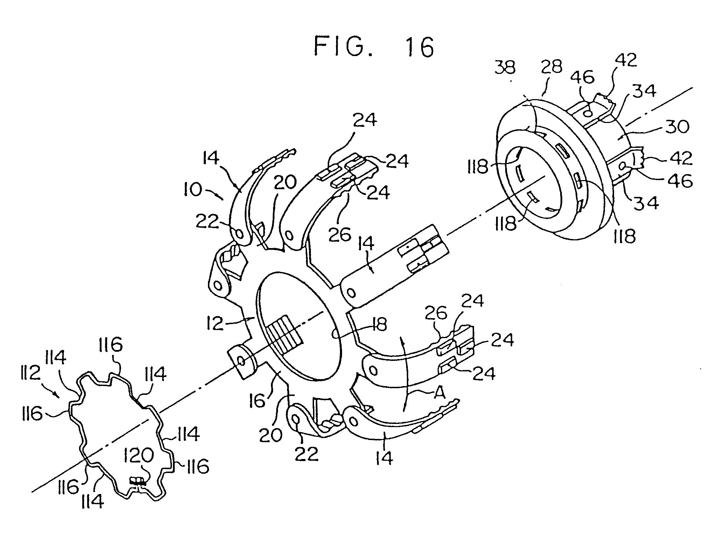

Figs. 15 and 16 show an eighth embodiment of the present invention. In this embodiment, as for the apparatus body installing means, an end ring 112 formed by bending a resilient wire product, such as spring round steel, is used instead of the end ring 36 of the first embodiment.

Attachment installing portions 114 whose diameter is substantially equivalent to a diameter D10 of the inner peripheral portion of the attachment 30 and substantially U-shaped stopper portions 116 rising radially from the attachment installing portions 114 are formed alternately in the end ring 112. Meanwhile, a plurality of elongated through holes 118 extending circumferentially in correspondence with the stopper portions 116 are provided in the attachment 30.

The end ring 112 is inserted into the inner peripheral portion of the attachment 30 after the apparatus body 10 is disposed on the attachment 30. Specifically, the end ring 112 is installed on the attachment 30 after the opposite end portions of the end ring 112 are connected to each other by means of a rubber joint 120 with the stopper portions 116 projecting from the through hole 118. In this state, the attachment installing portions 114 are pressed and abut against the inner peripheral wall of the attachment 30. Consequently, since the disk portion 16 of the boss 12 abuts against the stopper portions 116, the apparatus body 10 is prevented from coming off the attachment 30.

It should be noted that, since the stopper portions 116 are supported by the projection 38 of the attachment 30, the stopper portions 116 do not become inclined even if they are pressed by the disk portion 16.

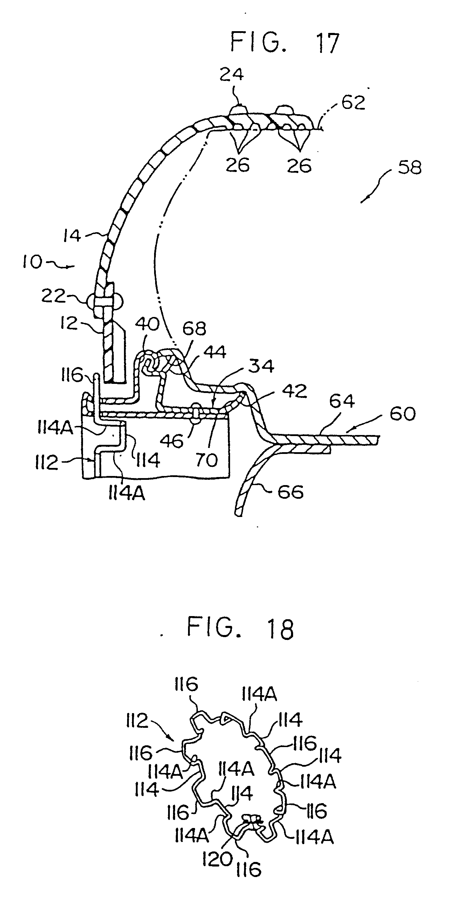

Figs. 17 and 18 show a ninth embodiment of the present invention. This embodiment differs from the eighth embodiment in the configuration of the end ring 112. In this end ring, the attachment installing portions 114 and the stopper portions 116 are not located in the same plane, but are constructed in a three-dimensional structure by virtue of the presence of bent portions 114A of the attachment installing portions that are bent in the same direction as that of the central axis of the end ring 112.

In the case of this end ring 112, since the bent portions 114A of the attachment installing portions are pressed and abut against the inner peripheral wall of the attachment 30 together with the attachment installing portions 114, the force with which the boss 12 presses the stopper portions 116 can be supported in a dispersed manner by the bent portions 114A of the attachment installing portions as well. Consequently, the effect of preventing the inclination of the stopper portions 116 is improved. In addition, since the standing capabilities of the stopper portions 116 are improved even in a state in which a force from the boss 1 does not act on the stopper portions 116, the vibrations of the end ring 112 can be reduced.

It should be noted that it goes without saying that the arrangements peculiar to the above-described embodiments can be used in combination with the arrangements of the other embodiments, as necessary.

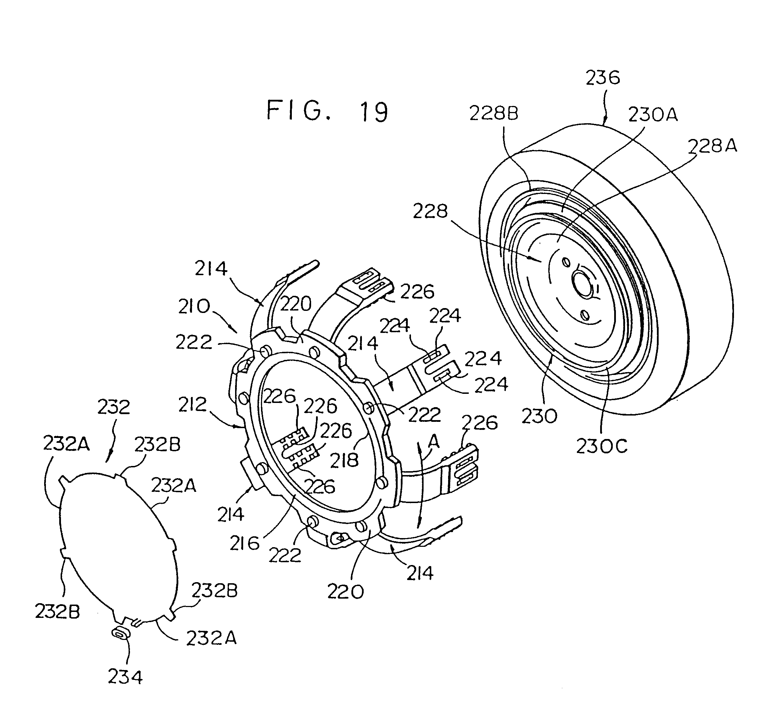

Figs. 19 to 21 show a tenth embodiment of the tire slippage preventing apparatus in accordance with the present invention.

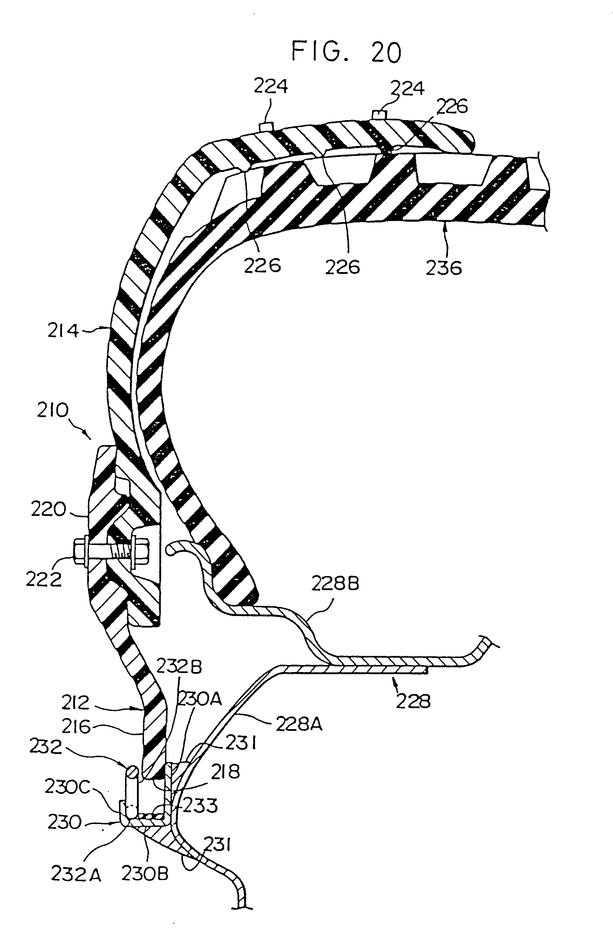

As shown in Figs. 19 and 20, an apparatus body 210 is provided with a boss 212 formed of a synthetic resin or a metal, such as aluminum, and a plurality of arms 214 (e.g., six to 10 pieces; eight pieces in this embodiment) made of a synthetic resin. As specific examples of these synthetic resin materials, a thermosetting resin, such as FRP, can be used for the boss 212, while a thermoplastic elastomer, such as thermoplastic urethane or thermoplastic rubber, or a blended product of ABS resin and thermoplastic urethane can be used for the arms 214.

A through hole 218 is formed in the central portion of a disk portion 216 of the boss 212, while eight (corresponding to the number of the arms 214) arm connecting portions 220 projecting from the periphery of the disk portion 216 at equal intervals are formed integrally around the periphery of the disk portion 216. Each of the arms 214 has one end portion thereof connected to the arm connecting portion 220 via a pin 222, while an intermediate portion thereof is bent, and a free end portion thereof extends in the axial direction of the boss 212. Spike pins 224 are provided on the outer peripheral surface of the free end portion of the arm 214, and projections 226 are formed integrally on the inner peripheral surface thereof.

Incidentally, each of the arms 214 is capable of being manually turned in the direction of an arrow A in Fig. 19 with the pin 222 as a fulcrum.

A support 230 for supporting the apparatus body 210 by a wheel 228 is arranged in such a manner that an elongaged steel plate bent and formed with a substantially J-shaped cross section, as shown in Fig. 20, is further bent and formed in an annular shape, as shown in Fig. 19. This support 230 is arranged such that a long flange 230A is opposed to a disk portion 228A of the wheel 228 with an annular center thereof aligned with the axis of the wheel 228, and the long flange 230A and a base portion 230B are welded to the disk portion 228A around the entire periphery or at a number of places along the periphery via a welding material 231. The outside diameter of a short flange 230C is set such as to be smaller than the diameter of the through hole 218 formed in the disk portion 216. In addition, the outside diameter of the long flange 230A is set such as to be greater than the diameter of the through hole 218.

A rubber belt 233 which extends from a root portion of the flange 230A to the vicinity of a root portion of the flange portion 230C is attached around the entire outer peripheral surface of the base portion 230B.

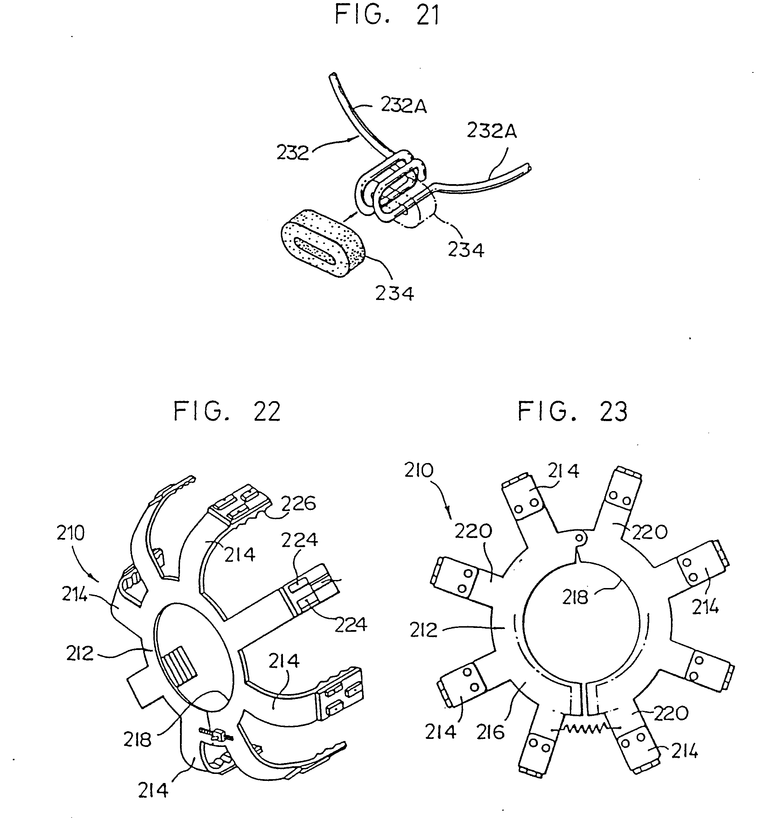

A retainer 232 for preventing the apparatus body 210 from being removed from the support 230 is arranged by bending a resilient wire, such as spring round steel, into an annular shape so as to form an annular body of a shape in which a plurality of (six in this embodiment) U-shaped projections 232B project from general arcuate portions 32A at regular intervals. This retainer 232 is arranged such that the radius of curvature of the general portion 232A is substantially equal to the radius of curvature of the outer peripheral surface of the base portion 230B of the support 230, and bent opposite end portions thereof are connected to each other by means of a rubber ring 234, as shown in detail in Fig. 21. At that juncture, the opposite end portions of the retainer 232 are not brought into contact with each other, and the rubber ring 234 is adapted to urge these opposite end portions in the directions in which they approach each other. In addition, the maximum distance of each of the projections 232B from the center of the retainer 232 is set such as to be greater than the radius of the through hole 218 formed in the disk portion 216 of the boss 212.

The mounting and demounting procedures of the present embodiment will be described hereafter.

In mounting the tire slippage preventing apparatus, since the support 230 is already secured to the wheel 228, no work is required for installing the support 230 on the wheel 228 at the time of use, as has been necessary in a conventional apparatus.

Accordingly, the apparatus body 210 is directly installed on the support 230. This installation is carried out by an operation in which the boss 212 is fitted with the base portion 230B of the support 230 with the through hole 218 of the boss 212 facing the support 230. At that juncture, a tire 236 mounted on the wheel 228 is in contact with the ground over a wide area since the tire 236 is pressed by the weight of the vehicle. Accordingly, in that state, with respect to the mutually two pieces of the eight arms 214, it is difficult for the free end portions thereof to be disposed at the tread portions in the predetermined positions. Accordingly, the two arms 214 are placed with the grounding portion of the tire 236 therebetween, and they are rotated in the directions in which they separate from each other with the pins 222 as fulcrums, and are disposed on tread portions at positions offset in the circumferential direction from their predetermined positions.

Subsequently, the retainer 232 is installed on the support 230. This installation is effected by an operation in which, after the diameter of the retainer 232 is expanded and the retainer 232 is inserted over the flange 230C of the support 230, the opposite end portions thereof are connected to each other by means of the rubber ring 234. Consequently, the general portions 232A are pressed and abut against the base portion 230B of the suppport 230, while the projections 232B are brought into contact with the flange 230C of the support 230, thereby preventing the retainer 232 from coming off.

This completes the mounting operation, and since the disk portion 216 of the boss 212 abuts against the projections 232B of the retainer 232, the apparatus body 210 is prevented from coming off from the support 230, and the movement thereof toward the wheel 228 side is restrained since the disk portion 216 of the boss 212 abuts against the flange 230A of the support 230.

Subsequently, shortly after the vehicle has begun running, the two arms 214 which had been swung are swung naturally in the directions opposite to those described above and are disposed in the predetermined positions. In this state, the boss 212 is capable of moving with play in the radial direction at least by a distance in which the outside diameter of the rubber belt 233 is subtracted from the diameter of the through hole 218.

While the vehicle is running, since the projections 226 are formed on the free end portion of each of the arms 214, a frictional force thereof relative to the tread portion is large, and the arms 214 are rotated together with the tire 236. Since the diameter of the arm 214 in contact with the ground is reduced since the tire 236 in this portion is pressed by the weight of the vehicle, the arm 214 is bent elastically to absorb this deflection, and, at the same time, the boss 212 moves inwardly in the radial direction. As a result, the apparatus body 210 undergoes elliptical motion about the axle while the vehicle is running, and the surface of the boss 212 facing the through hole 218 repeats collision with the support 230, but since it abuts against the rubber belt 233 and does not directly abut against the base portion 230B of the metal surface, the impact is absorbed and the generation of noise is inhibited.

The demounting of the apparatus body 210 can be effected readily in the procedures opposite to those of the mounting operation. The support 230 remains installed on the wheel 228 after the apparatus body 210 is demounted, but the support 230 does not affect the running of the vehicle and the state of installation of the wheel 228. In a state in which the apparatus body 210 is removed, a large external force which would otherwise exert an influence on the durability does not occur, and the support is made integral with the wheel 228 in a compact form. Therefore, unlike a conventional support, the support 230 does not give a sense of incompatibility in terms of design even when the apparatus body 210 is removed. Accordingly, even if the wheels 28 with the supports 30 secured thereto are used during a season other than a snowy period, no problems are presented in terms of both functions and design.

Furthermore, in the state in which the apparatus body 210 is removed, it is possible to completely cover the support 230 with a wheel cap by retaining the wheel cap (not shown) at the flange formed at the support 30 or a rim 228B of the wheel 228 and by installing the same to the wheel 228.

In this case, it is possible to prevent the groove (i.e., the portion enclosed by the flanges 230A, 230C, and the base portion 230B) formed in the support 230 from being covered up with snow or the like. Therefore, the work of scraping off the snow from the groove before installing the apparatus body 210 becomes unnecessary.

For the purpose of preventing the groove from being covered up with snow, it is also possible to cope with this problem by using a cap or a cover which is adapted to close only the opening of the groove instead of the aforementioned wheel cap which extensively covers the disk portion 228a of the wheel 228.

Thus, since the support 30 remains secured at an optimum position of the wheel 228 in relation to the apparatus body 210, there is no need to install or adjust the support 230 each time a snowy season sets in, and the apparatus body 210 can always be installed readily on the wheel 228.

In addition, in this embodiment, since the support member 230 is secured to the wheel 228 by means of welding, no problems occur in which screws become loose and the apparatus body 210 cannot be supported positively, with the result that the functions inherent to the apparatus cannot be demonstrated. Hence, the reliability at the time of running on snow can be improved.

Furthermore, in this embodiment, since the number of parts required in installing the apparatus body 210 on the wheel 228 decreases substantially, the scattering away of the costs can be reduced, and parts that are removed from the wheel and stored during an off season can be prevented.

Moreover, in this embodiment, since the support 230 is formed of a thin steel plate which provides high strength, and since not much space is required for installation in the axial direction of the wheel 228, an amount of the support 230 projecting from the wheel 228 can be checked to a minimum. In addition, the problem of a conventional apparatus in which, depending on a type of vehicle, an installation member cannot be accommodated in the fender of the vehicle can be overcome.

Incidentally, in the above-described embodiment, the outside diameter of the short flange 230C of the support 230 is set such as to be smaller than the diameter of the through hole 218 formed in the disk portion 216. However, in cases where the boss 212 has a split structure, as shown in Figs. 22 and 23, it is possible to dispense with the retainer 232 by making the diameter of the through hole 218 greater.

In the above-described embodiment, although the retainer 232 formed of a steel wire is combined with the rubber ring 234, these members can be implemented by means of various other arrangements. In short, since it suffices if the arrangement is such that, after the apparatus body 210 is installed on the support 230, the apparatus body 210 will not come off the support 230, the flange 230C can be dispensed with from the support 230.

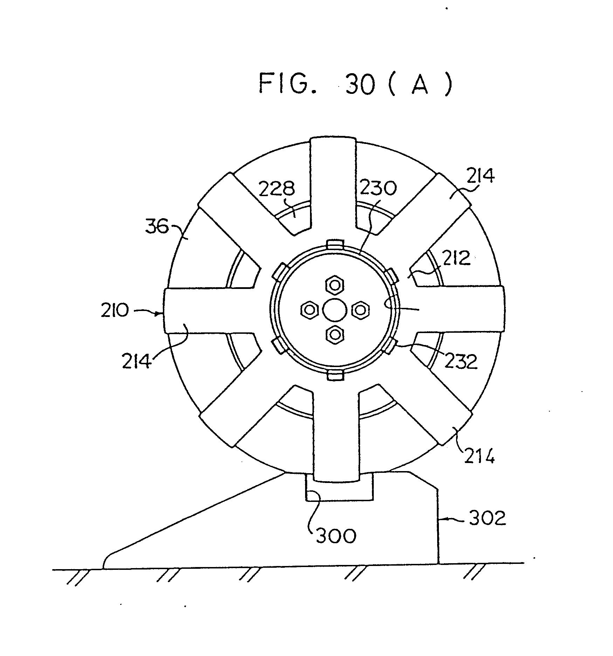

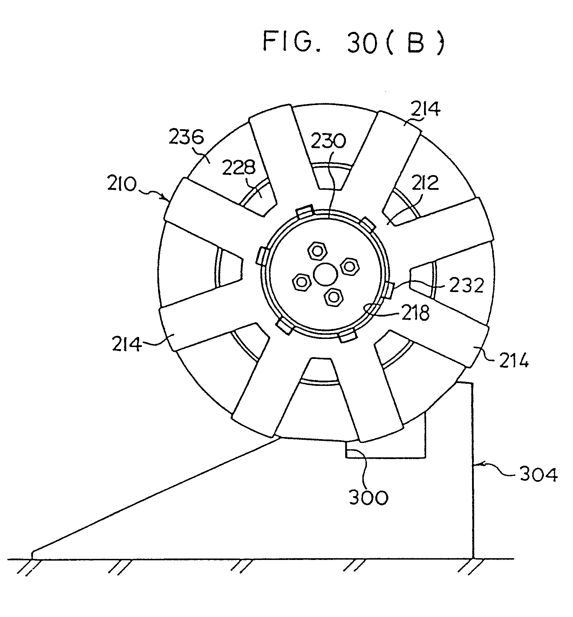

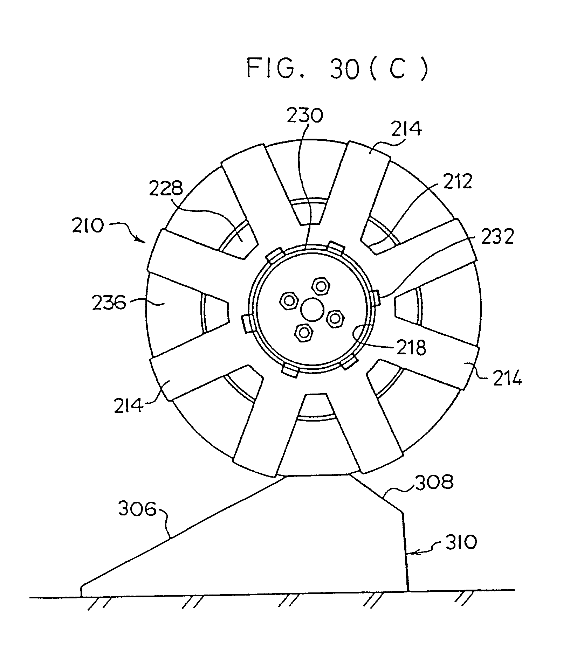

In addition, in this embodiment, although the arms 214 are installed on the boss 212 in such a manner as to be swingable, the arms 214 may be secured by means of a plurality of pins such as to be immovable, or both the arms 214 and the boss 212 may be formed integrally. In this case, in cases where inconveniences occur in installing the apparatus body on the tire 236, an auxiliary mounting tool may be used, such as tire mounting tables 302, 304 in which a recess 300 is formed, as shown in Figs. 30(A), 30(B), or a tire mounting table 310 in which inclined surfaces 306, 308 are formed, as shown in Fig. 30(C).

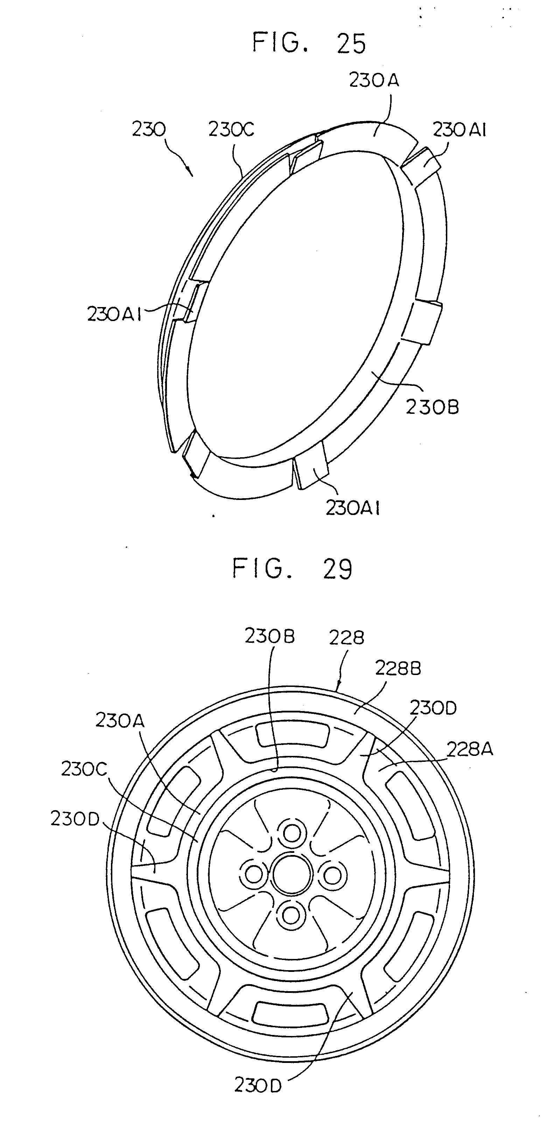

Figs. 24 and 25 show an eleventh embodiment of the present invention. This embodiment differs from the tenth embodiment in that the flange portion 230A of the support 230 is cut out at equal intervals, and only cutout portions 230A1 alone are welded to a disk portion 228A of the wheel 228.

In this embodiment, the costs can be reduced in comparison with the full-circled welding, and since the support 230 abuts against the disk portion 228A over a wide area, the installation strength is not inferior. In this embodiment, the welding material 231 becomes unnecessary.

Incidentally, in this embodiment, the cutout portions 230A1 can be secured to the disk portion 228A by means of bolts and nuts or rivets instead of welding.

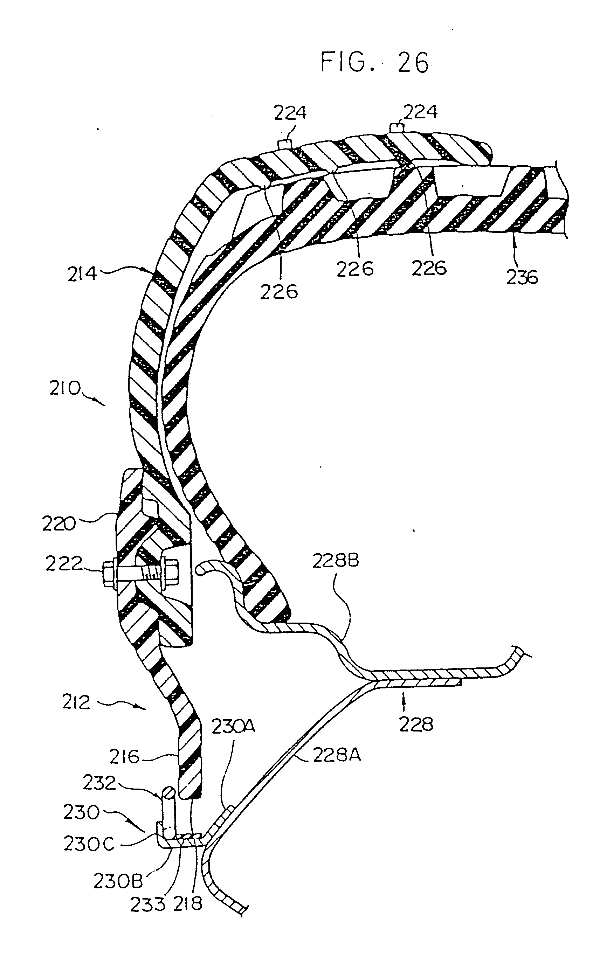

Fig. 26 shows a twelfth embodiment of the present invention. This embodiment differs from the tenth embodiment in that the flange 230A of the support 230 is not parallel with the flange 230C and is disposed in an inclined manner, and that the overall flange 230A abuts against the disk portion 228A of the wheel 228 and is secured to the entire periphery thereof or a number of places thereof by means of welding.

In the case of this embodiment, the flange 230A of the support 230 is incapable of restraining the movement of the boss 212 of the apparatus body 210. However, since the arms 214 abut against the flange of the rim 228B of the wheel 228 and the movement thereof is restricted, no problem is presented for practical purposes.

In this embodiment as well, the flange 230A can be secured to the disk portion 228A by means of bolts and nuts or rivets, in the same way as the eleventh embodiment.

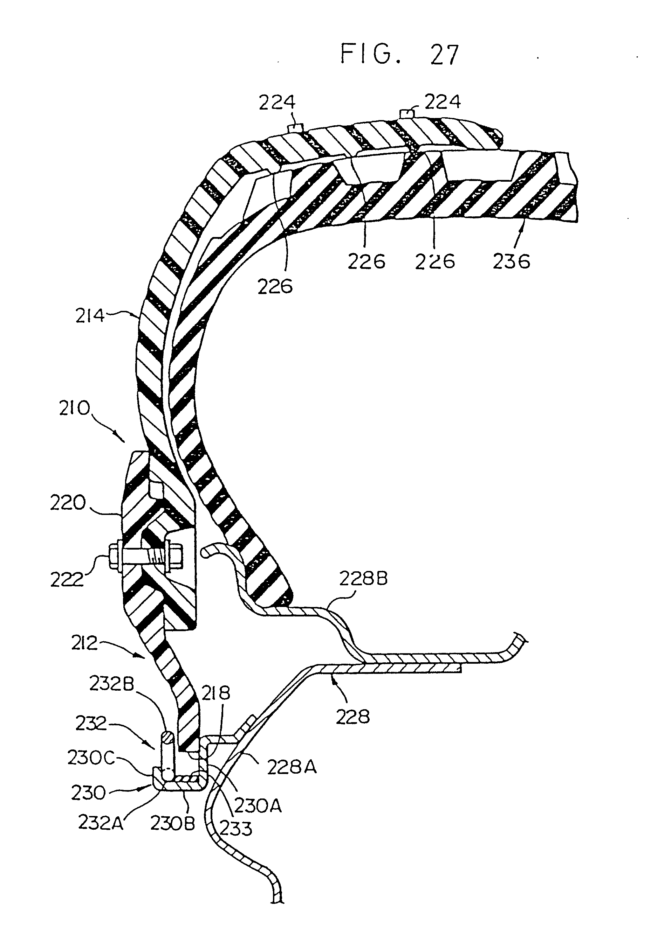

Fig. 27 shows a thirteenth embodiment of the present invention. In this mbodiment, the long flange port 230A of the support 230 is bent orthogonally after it is made to stand in parallel with the short flange 230C, and the long flange portion 230A is then bent further at an obtuse angle. The other end portion thereof is secured to the disk portion 228A of the wheel 228 by means of welding or other similar means described above.

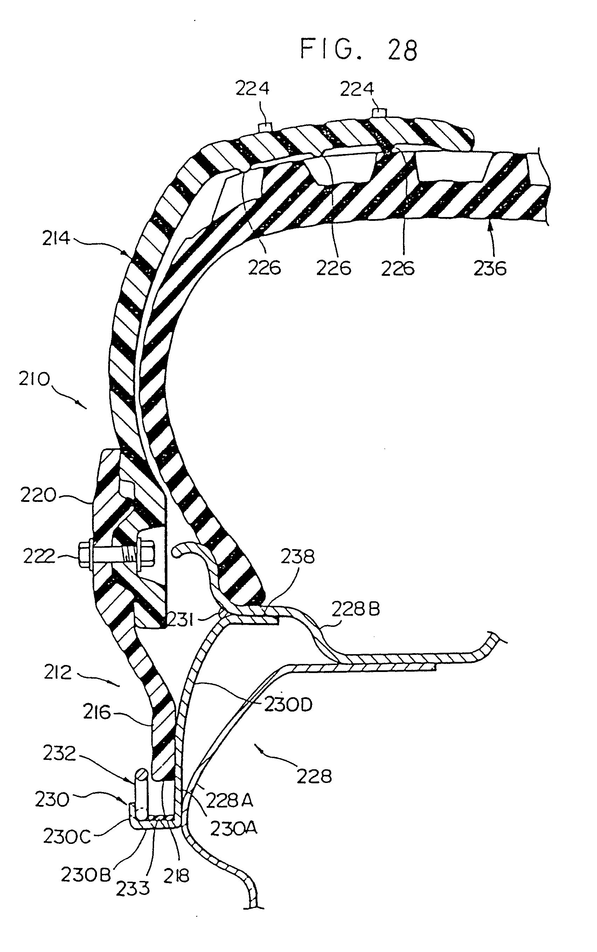

Figs. 28 and 29 show a fourteenth embodiment of the present invention. This embodiment differs from the foregoing embodiment in that the support 230 is welded to the rim 228B of the wheel 228. Consequently, a plurality of (six in this embodiment) of arm portions 230D extending radially from the flange 230A at equal intervals are formed integrally with the support 230. The tip portions of the arm portions 230D are secured to the rim 228B at portions of the welding material 231 and portions designated by reference numeral 238.

In the case of this embodiment, although the disk portion 228A of the wheel 228 is formed into various configurations so as to be provided with the effect of a design and the like, the configuration of the rim portion 228B is substantially identical. Consequently, there is the advantage that if the diameter of the rim is identical, one kind of support 30 is capable of being applied to various types of wheel 228 regardless of the configuration of the disk portion 228A.

Figs. 31 to 44 show a fifteenth embodiment in which a slippage preventing structure in accordance with the present invention is applied to a tire slippage preventing apparatus.

As shown in Figs. 32 and 33, a body 410 of a tire slippage preventing apparatus is provided with a boss 412 and eight arms 14 which are respectively formed of a synthetic resin. As specific examples of these materials, a thermoplastic resin, such as thermoplastic elastomer. polyethylene, and thermoplastic polyurethane, as well as a thermosetting plastic, such as FRP (fiber-reinforced plastic) and thermosetting polyurethane, can be used.

A through hole 418 is formed in the central portion of the disk portion 414 of the boss 412, and eight arm connecting portions 420 projecting radially from the periphery of the disk portion 416 at equal intervals are formed integrally with said periphery. One end of each of the arms 414 is connected to the arm connecting portion 420 via a pin 422, and a central portion of the arm 414 is bent, while a free end portion thereof extends in the axial direction of the boss 412. A rubber plate 500 is disposed on the outer peripheral surface of the free end portion of the arm 414, and spikes 502 are disposed projecting from the rubber plate 500, while projections 426 are formed integrally with the inner surface thereof.

Incidentally, each of the arms 414 is manually swingable in the direction of an arrow A in Fig. 32 with the pin 422 as a fulcrum.

Fig. 31 shows the arm 414 before being connected to the boss 412. These arm 414 are respectively connected to the rubber plates 500 and spikes 502 arranged as described above, so as to constitute the slippage preventing structure. The arm 414 is produced by molding a synthetic resin such as the one described above, and the rubber plate 500 and the spikes 502 are bonded to the arm 414 simultaneously with the molding of the arm 414.

In other words, prior to the molding of the arms 414, the rubber plates 500 in which the spikes 502 are fixed. as shown in Figs. 34 and 35. are prepared. As shown in Figs. 36 and 37, the spike 502 is arranged in such a manner that tips 506 formed of a cemented carbide metal penetrate, and are retaioned by, a shank 504 formed of a steel plate and bent substantially into a U-shape in terms of its configuration before installation on the rubber plate 500. This spike 502 is installed in the rubber plate 500 in such a manner that legs 504A of the shank 504 are respectively inserted into through holes 508 formd in the rubber plate 500 and havng a rectangular section, and the legs 504A on the reverse side of the rubber plate 500 are calked with a gap between the calked portion and the reverse side of the rubber plate 500, as shown in Fig. 35.

As shown in Figs. 34 and 36, the planar configuration of the rubber plate 500 is substantially U-shaped, and a pair of the aforementioned through holes 508 are formed in each of legs thereof, as shown in Fig. 36. A pair of recesses 510 each having a circular section and opening at the surface are formed between the pair of through holes 508. and the tip 506 projecting from the reverse side of the shank 504 is adapted to be accommodated in this recess 510.

Incidentally, since the amount of projection of the tip 506 is small, the recesses 510 may not be particularly provided.

Projections 512 are formed integrally on the reverse side of the rubber plate 500 in such a manner as to be placed between the through holes 508, as shown in Fig. 38. This projection 512 has a trapezoidal section, as shown in Fig. 39, and its base is longer than its upside.

In addition, the peripheral sides of the rubber plate 500 are tapered and broaden toward the base, as shown in Figs. 35, 39, and 40.

The rubber plate 500 in which the spikes 502 are installed, as shown in Figs. 34 and 35, is set in a metal mold for molding the arm 414, and the arm 414 is formed by injection molding in this state. At that juncture, an adhesive is aplied to the reverse side of the rubber plate 500 and the legs 504A of the shank 504. As a result, the arm 414 in which tip portions thereof are bifurcated, as shown in Fig. 41, can be obtained. Simultaneously with molding, the rubber plate 500 and the spikes 502 are bonded securely to the tip portions of the arm 414.

In other words, the rubber plate 500 is bonded to the arm 414 via the adhesive, and the projections 512 are fitted with the arm in the manner of dovetail joints, as shown in Fig. 42. Consequently, the rubber plate 500 is positively prevented from moving upwardly (i.e., coming off) as seen in the drawing and moving in the longitudinal direction as viewed in the drawing. At the same time, the peripheral sides of the rubber plate 500 are also fitted with the arm 414 in the manner of dovetail joints, so that the movement thereof in the aforementioned direction are positively prevented.

Furthermore, since the legs 504A of the shank 504 are sealed in the resin portion of the arm 414, as shown in Fig. 43, the spikes 502 are bonded firmly to the arm 414, this also contributing to positively preventing the rubber plate 500 from moving in the aforementioned direction.

Since the arm 414 and the rubber plate 500 are bonded together, as described above, the arm 414 and the rubber plate 500 are bonded together without any clearance therebetween, with the result that the outer appearance thereof is improved, resulting in higher product value.

It should be noted that, although in the above-described embodiment, the projections 512 are formed with trapezoidal sections, a sufficient effect can be demonstrated even if they are formed with rectangular sections. In addition, the layout and the number of the projections 512 can be modified, as necessary.

In the above-described embodiment, the spike 502 is constructed in such a manner that the shank 504 is calked on the rear side of the rubber plate 500. However, the shank 504 may be calked on the front side of the rubber plate 500, as shown in Fig. 45.

In addition, in the above-described embodiment, an attempt is made to prevent the arm 414 from being fractured by bifurcating the tip portion of the arm 414 so as to shorten their length along the circumferential direction of the tire 462 (see Fig. 33). However, it is also possible to cause the tip portion thereof to be divided into a greater number of branches.

As shown in Figs. 32 and 33, an installing means 428 for installing the apparatus body 410 on a wheel 458 comprises an attachment 430 made of a steel plate formed into a tubular shape, a spring plate 434 secured to the attachment 430; and an end ring 436 which serves as a retainer and is detachably installed on the attachment 430. The attachment 430 is bent a multiplicity of times, as shown in Fig. 33, and an annular projection 438 is formed at one end portion thereof in the axial direction, while an annular recess 440 is formed in an intermediate portion thereof. The diameter of the annular projection 438 is made smaller than that of the through hole 418 in the boss 412.

A spring plate 434 is made of spring steel and is bent, as shown in Fig. 44, and retaining claws 442 are formed at one end portion thereof, while a guide claw 444 is cut out in an intermediate portion thereof, the other end portion thereof being fitted with the annular recess 440. As for the spring plates 434, four to eight pieces are disposed at equal intervals around the outer periphery of the attachment 430 and are secured by means of rivets 446.

A ring portion 448 and a flange 450 bent from the ring portion 448 are formed in the end ring 436. This ring portion 448 has a cross section substantially formed into a U-shape corresponding with the annular projection 438, and a portion thereof is split so as to be discontinuous. In addition, the end ring 436 is provided with a buckle 442 for connecting the opposite ends of the ring portion 448. The buckle 452 is arranged such that it has a lever 454 pivotally supported by one end portion of the ring portion 448 and a link plate 456 pivotally supported by the other end of the ring portion 448, and and end portion of the link plate 56 is pivotally supported by an intermediate portion of the lever 454.

The buckle 452 is arranged such that, when the lever 454 is inclined in the direction of an arrow B, the opposite end portions of the ring portion 448 are pulled by an increased tensile force so as to cause the diameter of the end ring 436 to be reduced. The flange 450 does not hamper the motion for reducing the diameter since grooves are formed in the perpheral portion thereof at fixed intervals. In a state of the end ring 436 in which its diameter is reduced, the diameter of the ring portion 448 is slightly smaller than that of the annular projection 438. Accordingly, when the ring portion 448 is set around the annular projection 438 and installed on the attachment 430, the end ring 436 is restrained by its own resiliency such as to be immovable. In addition, the outer diameter of the flange 450 in this state is sufficiently greater than the diameter of the through hole 418.

As shown in Fig. 33, a wheel 458, on which the tire slippage preventing apparatus having the above-described arrangement is installed comprises a wheel 460 and a tire 462 installed on the wheel 460. The wheel 460 comprises a rim 464 to which the tire 462 is fitted and a disk portion 466 welded to the rim 464. Annular grooves 468, 470 are respectively formed in an end portion and intermediate bent portion of a lug of the rim 464.

Incidentally, a distance between the inner peripheral surface of the free end portion of the arm 414 and an axis of the boss 412 is set to be substantially identical with that between a tread portion in the ground-non-contacting portion of the tire 462 and an axis of the disk 466. In addition, with respect to the apparatus body installing means as well, circumference diameters D1, D2 (see Fig. 33) of the retaining claws 442 and the guide claw 444 formed on the spring plate 434 are determined in relationship with the rim 464.

The procedures for mounting and demounting the tire slippage preventing apparaus in accordance with this embodiment as well as the operation thereof will be described hereafter.

When mounting the tire slippage preventing apparatus, the attachment 430 of the apparatus body installing means 428 is first installed on the wheel 460. This installation is completed by a simple operation in which the attachment 430 is pressed into the inner peripheral portion of the rim 464.

In other words, the attachment 430 is moved inwardly in a state in which the retaining claws 442 of the spring plate 434 are subjected to elastic deformation in the direction in which the diameter is reduced, and the attachment cannot be moved any further in a state in which the retaining claws 442 are engaged with the annular groove 470. In addition, in this state, the guide claw 444 of the spring plate 434 resiliently abuts against the annular groove 468. As a result, the attachment 430 is securely fixed to the wheel 460.

Subsequently, the apparatus body 410 is installed on the attachment 430. This installation is effected by an operation in which the boss 412 is fitted with the attachment 430 with the through hole 418 in the boss 412 opposing the attachment 430. At that juncture, the tire 462 is pressed by the weight of the vehicle and is in contact with the ground over a wide area. Accordingly, with respect to the mutually adjacent two arms 414 of the eight arms 414, in that state it is difficult for the free end portions thereof to be disposed on the tread portions at the predetermined position of the tire 462. Therefore, the two arms 414 are placed between the ground-contacting portion of the tire 462, and they are swung with the pins 422 as fulcrums in the directions in which they are separated from each other, and are disposed on the tread portions offset in the circumferential direction from their predetermined positions.

Then, the end ring 436 is installed on the attachment 430. This installation is effected by an operation in which, in a state in which the flange 450 side of the end ring 436 faces the boss 412 and the lever 454 is not inclined, the ring portion 448 is wound around the annular projection 438 of the attachment 430, and the lever 454 is then inclined. As a result, the end ring 436 is fixed securely to the attachment 430. This completes the mounting operation.

Subsequently, shortly after the vehicle has begun running, the two arms 414 are swung naturally in directions opposite to those described above, and are thus disposed in their predetermined positions. In this state, at least in the radial direction, the boss 412 is capable of moving with play by a distance in which the outer diameter of the attachment 430 with which the boss 412 is fitted is subtracted from the diameter of the through hole 418.

When the wheel 458 is rotated as the vehicle runs, the frictional force of the arms 414 with respect to the tire 462 is large since the projections 426 are formed at the free end portions thereof, so that the arms 414 rotate together with the wheel 458. At the portion of the arm 414 which has been brought into contact with the ground, the diameter of the arm 414 is reduced since the tire 462 is pressed by the weight of the vehicle. Consequently, to absorb this deflection, the arm 414 is bent resiliently, and, at the same time, the boss 412 moves radially inwardly. Accordingly, the apparatus body 410 undergoes elliptic motion about the axle while the vehicle is running. Since the arms 414 are provided with the spikes 502, a gripping force is increased particularly at the time of starting, braking, and turning, so that the tire 462 displays a treading performance similar to that of a spike tire.

At the time when the vehicle turns, a side force acts, and this force tends to move the boss 412 in the axial direction and to come off the attachment 430. However, the boss 412 is brought into contact with the flange 450 of the end ring 436, which prevents the boss 412 from coming off.

In addition, even in cases where the tire 462 is displaced in the width-wise direction relative to the wheel 460 owing to the action of a side force, a load which results from the moment acting on the apparatus body 410 and the apparatus body installing means 428 can be absorbed since the apparatus body installing means 428 is subjected to elastic deformation.

While the vehicle is running, a force acts to separate the rubber plate 500 and the spikes 502 from the arm 414, but since these members are securely bonded to the arm 414, as described above, they will no be removed even if they are used over long periods of time.

In the demounting of the tire slippage preventing apparatus, only the apparatus body 410 and the end ring 436 are normally demounted. To demount the apparatus body 410, the lever 454 is first pulled up, which causes the diameter of the ring portion 448 to expand, allowing the end ring 436 to be removed from the attachment 430. At that juncture, if all the arms 414 are not in contact with the ground, the apparatus body 410 can be pulled out from the attachment 430, which completes the demounting operation. On the other hand, when some arms 414 are in contact with the ground, demounting is effected in procedures opposite to those of the mounting operation.

Even if the attachment 430 remains installed on the vehicle, the attachment 430 does not affect the running of the vehicle, so that it can be left installed during a snowy season regardless of whether or not the tire slippage preventing apparatus is required. On the subsequent occasion of the mounting operation, only the apparatus body 410 and the end ring 436 may be installed. When removing the attachment 430, it can be done so readily by simply pulling it out.

Figs. 46 to 48 show a sixteenth embodiment of the present invnetion. This embodiment basically differs from the fifteenth embodiment only in the configuration of the spikes 502.

The spikes 502 in accordance with this emboidment are arranged in such a manner that tips 518 are fitted with, and retained by, a cylindrically shaped shank 516 in which a flange 514 is formed, as shown in Fig. 47. Before the arm 414 is molded, the spikes 502 are inserted into through holes 520 from the reverse side of the of the rubber plate 500, as shown in Fig. 48, and are fixed to the rubber plate 500 by using an adhesive, as necessary, with the tip portions thereof projecting from the surface of the rubber plate 500. The rubber plate 500 with the spikes thus installed is set in an injection mold, and molding of the arm 414 is started in the same manner as that of the above-described embodiment. In this case as well, an adhesive is applied in advance to the rear surface of the rubber plate 500 and the reverse and peripheral sides of the flange 514.

In the case of this embodiment, the spikes 502 are only embedded in the arm 414 and are not sealed in, unlike the case of the foregoing embodiment. However, the spikes 502 are bonded to the arm 414 securely. If a more secure bonding is desired, the flange 514 can be sealed in the arm 414, as shown in Fig. 49, if the spikes 502 are installed in the rubber plae 500 with the flange 514 separated from the rear surface of the rubber plate 500.

Furthermore, the effect of preventing the spikes 502 from coming off can be improved by laying a canvas, as shown in Fig. 50, by forming projections 122 on the upper surface of the flange 114, as shown in Fig. 51, or by forming through holes 524 penetrating the flange 514 in the direction of the thickness thereof, as shown in Fig. 52.

Figs. 53 to 56 show a seventeenth embodiment of the present invention. In this embodiment, the spike 502, unlike that of the fifteenth embodiment, is arranged such that, before the spike 502 is installed in the rubber plate 500, the shank 504 is bent in advance substantially into the shape of a letter C, and the through holes 508 formed in the rubber plate 500 are made widely open so as not to hamper the entrance of the calked potions of the shank 504.

Accordingly, productivity can be improved since the work of calking the shank 504 is carried out in a state separated from the rubber plate 500. Moreover, the spikes 502 are securely bonded to the arm 414 in the same way as the fifteenth embodiment since the shank 504 is sealed in the resin portion of the arm 414 in the same manner as the fifteent embodiment.

In addition, in the rubber plate 500 of this embodiment, a side wall 500B is formed continuously along the periphery of a ceiling wall 500A whose surface serves as a tread surface. Furthermore, a flange wall 500C is formed continuously along the side wall 500B, and these portions form a substantially C-shaped cross section so as to allow the rubber plate 500 to envelop the tip portion of the arm 414. In addition, a multiplicity of projections 550 are formed on the rear surface of the ceiling wall 500A, and a multiplicity of through holes 552 are formed in the flange wall 500C so as to engage with the resin portion.

Accordingly, this arrangement causes the rubber plate 500 to be securely bonded to the tip portion of the arm 414.

Fig. 57 shows a modification of the seventeenth embodiment. This modification differs from the preceding embodiment in that the spike 502 is arranged such that the shank 504 is bent to have a substantially hat-shaped cross section. In this modification as well, the shank 504 is bent in advance before the spike 502 is installed in the rubber plate 500.

The spikes 502 illustrated in the fifteenth to seventeenth embodiments and the modification thereof are respectively constituted by the metal shanks 504, 516 and the metal tips 506, 518, respectively. However, the spikes 502 may be formed of a highly abrasion resistant resin in vew of the need for improvement of the environment and a reduction in costs. If they are made of a resin, it is possible to readily obtain at low cost those having a complicated configuration for improving the ice treading performance. Figs. 58 to 64 illustrate the spikes 502 that are formed integrally by means of a resin.

Fig. 58 shows an example in which a pin portion 526 and a flange 528 are provided with circular cross sections, while Fig. 59 shows an example in which said parts 526, 528 are provided with square cross sections.

Figs. 60 and 61 show examples of the spike 502 which are made as the so-called macaroni type in which the pin portions 526 shown in Figs. 58 and 59 are provided with a hole 530 with a bottom which opens at the tip surface of the pin portion 526. In this spike 502, an edge is formed at the opening of the hole 530 with a bottom, so that the number of edges increases. In addition, since the hole 530 with a bottom is formed, the area of the tip surface of the pin portion 526 is reduced, thereby increasing a pressure-receiving force per unit area. Hence, the braking performance, in particular, can be improved.

Incidentally, if a substance having good water-absorbing properties, such as chamois leather or foamed urethane, is filled in the hole 530 with a bottom, even if a water film is formed on ice or snow, the water film can be absorbed and the absorbed water can be discharged by a centrifugal force, thereby making it possible to control the occurrence of hydro-planing.

Fig. 62 shows an example of the spike 502 which has a configuration in which the spikes 502 shown in Fig. 58 are piled in two stages. The arrangement is such that a pair of flanges 528 are used to clamp the rubber plate 500 from the obverse and reverse sides thereof, which improves the effect of preventing the spike 502 from coming off.

Fig. 63 shows an example of the spike 502 which is arranged such that one end surface of a cylindrically shaped rubber material 532 is bonded to the rear surface of the flange 528 of the spike 502 shown in Fig. 58, while the other end surface of the rubber material 532 is bonded to a circular plastic plate 534, the plastic plate 534 being adapted to be embedded in the arm 414. With this spike 502, the rubber material 532 absorbs an external force to which the rubber material 532 is subjected from the road surface from various angles, and a large force does not act on the plastic plate 534, so that the coming-off-preventing effect is very large.

Fig. 64 shows an example of the spike 502 which has a separatable structure, and a spike portion 138 is screwed into a base portion 536 embodded in the arm 414. In this spike 502, when the spike portion 538 becomes worn, the spike portion 538 can be replaced with a new spike portion 538.

It should be noted that it goes without saying that, as for the configuration of the spike 502, one made of a metal can be applied in addition to the above-described one made of a synthetic resin. In addition, it goes without saying that it is possible to use spikes of various other shapes and structures, including the so-called pyramid type, regardless of whether it is made of a metal or a synthetic resin.

Furthermore, in the fifteenth to seventeenth embodiments, the present invention is applied to the arm 414 of a tire slippage preventing apparatus. However, the scope of application of the present invention is unlimited since the present invention can be applied to, for instance, the endless tracks of snowmobiles, sole portions of snow shoes, and the like.

Referring now to Fig. 65, an eighteenth embodoment of the present invention will be described.

An apparatus body 610 is provided with a boss 612 and arms 614 respectively formed of a synthetic resin. A through hole 613 is formed in the boss 612. A spike portion 618 is installed on the free end side of the arm 614 via a rubber material 616, and this spike portion is placed between the tire and the road surface and functions to prevent the slippage of the tire. A rubber material 622 with a bolt is secured on an end portion of the arm 614 for installation to the boss 612. This rubber material 622 with a bolt comprises: a planar rubber plate 624 whose one surface is secured to the rubber plate 624; a metal plate 626 secured to the other surface of the rubber plate 624; and a bolt portion 628 secured to the metal plate 626. Accordingly, the installation of the arm 614 on the boss 612 is effected by causing the bolt portion 628 to penetrate a though hole 630 formed in the boss 612 and by tightening the bolt portion 628 by means of a nut 632.

In this embodiment, the bending strain of the arms 614 can be absorbed by the shearing deformation of the rubber plates 624, in the same way as the above-described fourth embodiment.

Referring now to Figs. 66 and 67, description of a nineteenth embodiment will be described.

This embodiment is similar to the tenth embodiment, and the members and parts that are identical with those of the tenth embodiment are designated with the same reference numerals, and description thereof will be omitted.

In this embodiment, elongated leg members 730 are secured to the support 230. A detailed description of the support 230 will be given below.

The support 230 is arranged by bending an elongated steel plate formed by bending the same into a substantially J-shaped cross section, in the same way as the tenth embodiment, and by further bending the same into an annular shape. The support 230 has the long flange 230A, the base portion 230B, and the short flange 230C. End portions of a plurailty of (four in this embodiment) the leg members 730 are secured to the flange 230A side of the support 230 at regular intervals (at intervals of 90° about the central axis of the wheel 228). The other end portions of the leg members 730 are provided with through holes 731 for installation on the wheel 228. Bolts 741 are embedded in a disk 740 of the axle to which the wheel 228 is installed. A wheel disk 228, a spacer 743, and the leg members 730 are fitted, in that order, over the bolts 741, and these members are tightened by nuts 742 against the disk 740. It goes without saying that the thickness of the spacers 743 can be altered, as required.

Referring now to Fig. 68, description of a twentieth embodiment will be described.

This embodiment is similar to the nineteenth embodiment, and the same members, parts and the like as those of the ninteenth embodiment will be designated by the same reference numerals, and description thereof will be omitted.

In this embodiment, with respect to the leg member 730, a special nut 750 is used instead of the nut 742. The special nut 750 is arranged such that a threaded hole 752 is formed in the head of a cap nut, and serves as a hub nut in the same way as the nut 742.

A hexagon bolt 754 is screwed into the threaded hole 752, and the leg member 730 and a spacer 756 are fitted with the bolt 754 in that order from the side of the hexagon head side, and are tightened by the special nut 750 and the bolt 754.

The thickness of the spacer 756 is selected in correspondence with the configuration of a disk 228A.

## Claims

1. A tire slippage preventing apparatus having an apparatus body provided with a boss in which a through hole is formed and arms extending radially from said boss and tip portions thereof located at an outer peripheral portion of tire of a wheel of a vehicle, and a support installed on the wheel and adapted to support said boss with an outer peripehral portion thereof penetrating said through hole, said apparatus comprising:

an annular groove disposed in said support and adapted to support said boss at said outer peripheral portion thereof, the diameter of a first annular side wall of said groove on the side of said annular groove penetrating said through hole being smaller than that of said through hole;

and an annular retainer disposed in said groove, at least a portion of said groove having a diameter greater than that of said through hole, whereby said apparatus body is prevented from coming off said support.

2. A tire slippage preventing apparatus according to Claim 1, wherein the width of said groove is defined by said first side wall and a substantially opposing second annular side wall, the diameter of said second side wall being greater than that of said through hole.

3. A tire slippage preventing apparatus according to Claim 2, wherein said retainer has a clamp mechanism, and the disposition of said retainer in said groove is effected by tightening said retainer with respect to said groove via said clamp mechanism.

4. A tire slippage preventing apparatus according to Claim 2, wherein said retainer is constituted by an annular spring material in which projections and recesses are formed in the radial direction.

5. A tire slippage preventing apparatus according to Claim 1, wherein said boss and said arms are connected to each other via a resilient material.

6. A tire slippage preventing apparatus according to Claim 1, wherein said arms are pivotally supported by said boss such as to be swingable.

7. A tire slippage preventing apparatus according to Claim 1, wherein said support is directly secured to said wheel.

8. A tire slippage preventing apparatus according to Claim 1, wherein leg members are secured to said support, said support being secured to the wheel via said leg members.

9. A tire slippage preventing apparatus according to Claim 1, wherein said leg members are respectively secured to the wheel via bolts for installing the wheel on the vehicle.

10. A tire slippage preventing apparatus according to Claim 1, wherein each of the tip portions of said arms is provided on the ground-contacting side thereof with a spike projecting from a rubber material.

11. A tire slippage preventing apparatus according to Claim 1, wherein said boss and said arms are formed integrally with each other.

## FIG. 1

## FIG. 3

FIG. 2

0 263 433

FIG. 4

FIG. 8

FIG. 5

76

74

72

74

74

50

36

48

52

54

FIG. 6

78

52

54

48

48

80

80

FIG. 7

FIG. 9

FIG. 10

FIG. 11

FIG. 12

# FIG. 13

0 263 433

# FIG. 14

# FIG. 15

FIG. 16

0 263 433

FIG. 17

FIG. 18

FIG. 19

0 263 433

# FIG. 20

## FIG. 21

232A

232

232A

234

234

## FIG. 22

226

210

224

214

224

214

212

214

218

214

## FIG. 23

210

214

220

220

218

212

214

214

216

220

214

FIG. 24

FIG. 25

230A

230    230C    230A1

230A1

230B

230A1

FIG. 29

230B    228    228B

230A    230D    228A

230C

230D

230D

# FIG. 26

## FIG. 27

FIG. 28

FIG. 30 ( A )

FIG. 30(B)

# FIG. 30 ( C )

FIG. 31

FIG. 33

# FIG. 32

0 263 433

FIG. 34

502 504 506
506
506
500
502
504
XXXV
XXXV
506

FIG. 36

506
502
504
XXXVII
506
506
502
504A
XXXVII
506 504
504A
510
508
508
500
508
510
508
510
510
508

FIG. 35

500
506 504 502 506
508
504A 504A
508

FIG. 37

506
506
502
504
504A
504A

FIG. 38

FIG. 40

FIG. 39

FIG. 41

414

FIG. 46

XXXXVII

502

502

502

518 502

500

426

502

414

FIG. 42

500

414

426  512 426  512 426

FIG. 44

434

D2

444

DI

442

FIG. 43

414 500

506 502 506

504

426  504A 426 504A

FIG. 45

502  504

500  506  506  414

FIG. 47

FIG. 48

FIG. 49

## FIG. 50

518   502

500

521

414

516

## FIG. 51

522   518   502   522

500

414

514   516

## FIG. 52

514   518   502   516

500

414

524   524

## FIG. 53

## FIG. 54

FIG. 55

FIG. 56

FIG. 57

## FIG. 58

## FIG. 59

## FIG. 60

## FIG. 61

## FIG. 62

## FIG. 63

## FIG. 64

FIG. 65

# FIG. 66

FIG. 67

FIG. 68